(19) Europäisches Patentamt / European Patent Office / Office européen des brevets

(11) **EP 4 144 706 A1**

(12) **EUROPEAN PATENT APPLICATION**
published in accordance with Art. 153(4) EPC

(43) Date of publication:
**08.03.2023 Bulletin 2023/10**

(21) Application number: **21796646.4**

(22) Date of filing: **13.04.2021**

(51) International Patent Classification (IPC):
$C03C\ 3/083$ (2006.01)    $C03C\ 3/085$ (2006.01)
$C03C\ 3/087$ (2006.01)    $C03C\ 3/091$ (2006.01)
$C03C\ 3/093$ (2006.01)    $A61J\ 1/05$ (2006.01)

(52) Cooperative Patent Classification (CPC):
**A61J 1/05; C03C 3/083; C03C 3/085; C03C 3/087; C03C 3/091; C03C 3/093**

(86) International application number:
**PCT/JP2021/015340**

(87) International publication number:
**WO 2021/220801 (04.11.2021 Gazette 2021/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.04.2020 JP 2020080013**

(71) Applicant: **Nippon Electric Glass Co., Ltd.**
**Otsu-shi, Shiga 520-8639 (JP)**

(72) Inventor: **ARAI Satoshi**
**Otsu-shi Shiga 520-8639 (JP)**

(74) Representative: **Henkel & Partner mbB**
**Patentanwaltskanzlei, Rechtsanwaltskanzlei**
**Maximiliansplatz 21**
**80333 München (DE)**

(54) **MEDICINE CONTAINER GLASS, MEDICINE CONTAINER GLASS TUBE, AND MEDICINE CONTAINER**

(57) A glass for a pharmaceutical container of the present invention contains, as a glass composition, in terms of mol%, 70% to 85% of $SiO_2$, 3% to 13% of $Al_2O_3$, 0% to 5% of $B_2O_3$, 0.1% to 18% of $Li_2O + Na_2O + K_2O$, and 0% to 10% of $MgO + CaO + SrO + BaO$, in which a molar ratio $(Li_2O + Na_2O + K_2O) / Al_2O_3$ is 1 or more and a molar ratio $(Li_2O + Na_2O + K_2O + MgO + CaO + SrO + BaO - Al_2O_3) / (SiO_2 + Al_2O_3)$ is 0.2 or less.

*FIG.1*

EP 4 144 706 A1

**Description**

TECHNICAL FIELD

The present invention relates to a glass for a pharmaceutical container, a glass tube for a pharmaceutical container, and a pharmaceutical container, which have excellent processability and hydrolytic resistance.

BACKGROUND ART

In related art, various glass containers have been used as pharmaceutical containers.

Pharmaceuticals are roughly classified into two types of oral agents and parenteral agents. In particular, in the case of a parenteral agent, a medicament filled and stored in a glass container is directly administered into the blood of a patient. Therefore, a glass container filled with parenteral agents is required to have very high quality.

In addition, it is required that ingredients of a medicament filled in a pharmaceutical container are not changed in quality. When a glass component is eluted into the medicament, properties of the medicament may be changed, which may affect the health and even life of the patient. Therefore, in each country pharmacopoeia, an elution amount of the glass component from the glass container is limited.

CITATION LIST

PATENT LITERATURE

Patent Literature 1: WO 2013/063275 A1

SUMMARY OF INVENTION

TECHNICAL PROBLEM

In recent years, with the development of medicine and pharmacology, medicaments having high medicinal efficacy have been developed. However, when such medicaments are filled and stored in a glass container formed of borosilicate glass, the inner surface of the glass container may be eroded and peeled off to cause a phenomenon of floating in the medicaments as flakes, so-called delamination. When an insoluble foreign matter generated due to delamination or the like is injected into the body of a patient together with a medicament, a fatal problem such as formation of thrombus in a blood vessel may occur.

In addition, since the glass for a pharmaceutical container is processed into a complicated shape such as an ampoule, a vial, a prefilled syringe, and a cartridge, it is also desired that the working temperature at the time of processing is low.

For example, Patent Literature 1 describes that when a content of $B_2O_3$ in a glass composition is reduced, delamination can be prevented. However, in this case, the glass component is evaporated at the time of processing and contaminates the inner surface of the glass container and the medicament since the viscosity of the glass is increased and the working temperature at the time of processing is increased. Meanwhile, the glass described in Patent Literature 1 contains a large amount of $Na_2O$ in the glass composition in order to lower the working temperature during processing, but in this case, the hydrolytic resistance deteriorates. In short, it is difficult for the glass described in Patent Literature 1 to achieve both the hydrolytic resistance and processability.

In view of the above circumstances, a technical object of the present invention is to provide a glass for a pharmaceutical container, a glass tube for a pharmaceutical container, and a pharmaceutical container, in which a content of $B_2O_3$ in a glass composition is small and which can achieve both hydrolytic resistance and processability.

SOLUTION TO PROBLEM

As a result of intensive studies, the present inventors have found that the above-described problems can be solved by strictly regulating the content of each glass component, and have proposed the present invention. That is, a glass for a pharmaceutical container of the present invention contains, as a glass composition, in terms of mol%, 70% to 85% of $SiO_2$, 3% to 13% of $Al_2O_3$, 0% to 5% of $B_2O_3$, 0.1% to 18% of $Li_2O + Na_2O + K_2O$, and 0% to 10% of $MgO + CaO + SrO + BaO$, in which a molar ratio $(Li_2O + Na_2O + K_2O) / Al_2O_3$ is 1 or more and a molar ratio $(Li_2O + Na_2O + K_2O + MgO + CaO + SrO + BaO - Al_2O_3) / (SiO_2 + Al_2O_3)$ is 0.2 or less. This makes it possible to achieve both hydrolytic resistance and processability while preventing delamination.

Here, "$Li_2O + Na_2O + K_2O$" refers to a total content of $Li_2O$, $Na_2O$, and $K_2O$. "$MgO + CaO + SrO + BaO$" refers to a total content of MgO, CaO, SrO, and BaO. "(LizO + Na$_2$O + K$_2$O) / Al$_2$O$_3$" refers to a value obtained by dividing the total content of LizO, Na$_2$O, and K$_2$O by the content of Al$_2$O$_3$. "(LizO + Na$_2$O + K$_2$O + MgO + CaO + SrO + BaO - Al$_2$O$_3$) / (SiOz + Al$_2$O$_3$)" refers to a value obtained by dividing a content, which is obtained by subtracting the content of Al$_2$O$_3$ from the total content of LizO, Na$_2$O, KzO, MgO, CaO, SrO and BaO, by the total content of SiOz and Al$_2$O$_3$.

In the glass for a pharmaceutical container of the present invention, the content of LizO is preferably 0 mol% to 8.1 mol%, the content of Na$_2$O is preferably 0.1 mol% to 8 mol%, and the content of K$_2$O is preferably 0.01 mol% to 5 mol%. As a result, the hydrolytic resistance can be effectively enhanced.

In the glass for a pharmaceutical container of the present invention, the content of MgO + CaO + SrO + BaO is preferably 0 mol% to 5 mol%. As a result, the hydrolytic resistance can be effectively enhanced.

In the glass for a pharmaceutical container of the present invention, the content of MgO is preferably 0 mol% to 1.5 mol%, the content of CaO is preferably 0 mol% to 4 mol%, the content of SrO is preferably 0 mol% to 0.3 mol%, and the content of BaO is preferably 0 mol% to 0.3 mol%. As a result, the hydrolytic resistance can be effectively enhanced.

In the glass for a pharmaceutical container of the present invention, a molar ratio LizO / (LizO + Na$_2$O + K$_2$O) is preferably 0.6 or less. Here, "LizO / (LizO + Na$_2$O + K$_2$O)" refers to a value obtained by dividing the content of Li$_2$O by the total content of LizO, Na$_2$O, and KzO.

In the glass for a pharmaceutical container of the present invention, a molar ratio (LizO + Na$_2$O + K$_2$O) / Al$_2$O$_3$ is preferably 2 or more. Thus, processability can be enhanced.

In the glass for a pharmaceutical container of the present invention, a molar ratio CaO / (LizO + Na$_2$O + K$_2$O + MgO + CaO + SrO + BaO) is preferably less than 0.018. Here, "CaO / (LizO + Na$_2$O + K$_2$O + MgO + CaO + SrO + BaO)" refers to a value obtained by dividing the content of CaO by the total content of LizO, Na$_2$O, KzO, MgO, CaO, SrO, and BaO.

The glass for a pharmaceutical container of the present invention preferably contains CaO. A molar ratio LizO / CaO is preferably 3.1 or less. This makes it liable to achieve both the hydrolytic resistance and processability. Here, "LizO / CaO" refers to a value obtained by dividing the content of Li$_2$O by the content of CaO.

In the glass for a pharmaceutical container of the present invention, the content of SiO$_2$+ Al$_2$O$_3$ + Li$_2$O + Na$_2$O + K$_2$O + MgO + CaO + SrO + BaO is preferably 90 mol% or more. This makes it liable to achieve both the hydrolytic resistance and processability. Here, "SiOz + Al$_2$O$_3$ + Li$_2$O + Na$_2$O + K$_2$O + MgO + CaO + SrO + BaO" refers to the total content of LizO, Na$_2$O, KzO, MgO, CaO, SrO and BaO.

In the glass for a pharmaceutical container of the present invention, the content of B$_2$O$_3$ is preferably 0.01 mol% to 1 mol%. Accordingly, it is possible to enhance the processability while preventing the occurrence of delamination.

In the glass for a pharmaceutical container of the present invention, the content of ZrOz is preferably 0 mol% to 2 mol%.

A glass for a pharmaceutical container of the present invention contains, as a glass composition, in terms of mol%, 70% to 85% of SiOz, 3% to 10% of Al$_2$O$_3$, 0% to 5% of B$_2$O$_3$, 0.1% to less than 13.9% of Li$_2$O + Na$_2$O + KzO, and 0% to 10% of MgO + CaO + SrO + BaO, in which a molar ratio LizO / (LizO + Na$_2$O + K$_2$O) is 0.5 or less, a molar ratio (LizO + Na$_2$O + K$_2$O) / Al$_2$O$_3$ is 2.0 or more, a molar ratio (LizO + Na$_2$O + K$_2$O + MgO + CaO + SrO + BaO - Al$_2$O$_3$) / (SiOz + Al$_2$O$_3$) is 0.156 or less, and a molar ratio CaO / (Li$_2$O + Na$_2$O + K$_2$O + MgO + CaO + SrO + BaO) is less than 0.018.

A glass for a pharmaceutical container of the present invention contains, as a glass composition, in terms of mol%, 70% to 85% of SiOz, 3% to 10% of Al$_2$O$_3$, 0% to 5% of B$_2$O$_3$, 0.1% to less than 13.9% of Li$_2$O + Na$_2$O + KzO, and CaO, in which a molar ratio LizO / (LizO + Na$_2$O + K$_2$O) is 0.5 or less, a molar ratio (Li$_2$O + Na$_2$O + K$_2$O) / Al$_2$O$_3$ is 2.0 or more, a molar ratio (LizO + Na$_2$O + K$_2$O + MgO + CaO + SrO + BaO - Al$_2$O$_3$) / (SiOz + Al$_2$O$_3$) is 0.156 or less, and a molar ratio LizO / CaO is 3.1 or less.

In the glass for a pharmaceutical container of the present invention, a molar ratio (MgO + CaO + SrO + BaO) / (LizO + Na$_2$O + K$_2$O + MgO + CaO + SrO + BaO) is preferably 0.06 or less. "(MgO + CaO + SrO + BaO) / (LizO + Na$_2$O + K$_2$O + MgO + CaO + SrO + BaO)" refers to a value obtained by dividing the total content of MgO, CaO, SrO and BaO by the total content of LizO, Na$_2$O, KzO, MgO, CaO, SrO and BaO.

A glass for a pharmaceutical container of the present invention contains, as a glass composition, in terms of mol%, 75% to 85% of SiOz, 3% to 13% of Al$_2$O$_3$, 0% to 4% of B$_2$O$_3$, 0.11% to 16% of LizO + Na$_2$O + KzO, 0.1% to 15% of Na$_2$O, and 0.01% to 5% of KzO, in which a molar ratio (LizO + Na$_2$O + K$_2$O) / Al$_2$O$_3$ is 2 or more, a molar ratio (MgO + CaO + SrO + BaO) / (LizO + Na$_2$O + K$_2$O + MgO + CaO + SrO + BaO) is 0.06 or less, and a molar ratio (LizO + Na$_2$O + K$_2$O + MgO + CaO + SrO + BaO - Al$_2$O$_3$) / (SiOz + Al$_2$O$_3$) is 0.2 or less.

In the glass for a pharmaceutical container of the present invention, a molar ratio CaO / (MgO + CaO + SrO + BaO) is preferably 0.5 or more. As a result, the hydrolytic resistance can be enhanced.

A glass for a pharmaceutical container of the present invention contains, as a glass composition, in terms of mol%, 70% to 85% of SiOz, 3% to 13% of Al$_2$O$_3$, 0% to 5% of B$_2$O$_3$, 0.1% to 16% of Li$_2$O + Na$_2$O + KzO, 0.1% to 15% of Na$_2$O, and 0.1% to 5% of MgO + CaO + SrO + BaO, in which a molar ratio (LizO + Na$_2$O + K$_2$O) / Al$_2$O$_3$ is 2 or more, a molar ratio CaO / (MgO + CaO + SrO + BaO) is 0.5 or more, and a molar ratio (LizO + Na$_2$O + K$_2$O + MgO + CaO + SrO + BaO - Al$_2$O$_3$) / (SiO$_2$ + Al$_2$O$_3$) is 0.2 or less. Here, "CaO / (MgO + CaO + SrO + BaO)" refers to a value obtained by dividing the content of CaO by the total content of MgO, CaO, SrO, and BaO.

In the glass for a pharmaceutical container of the present invention, a molar ratio $SiO_2 / Al_2O_3$ is preferably 10 or more. Here, "$SiO_2 / Al_2O_3$" refers to a value obtained by dividing the content of $SiO_2$ by the content of $Al_2O_3$.

A glass for a pharmaceutical container of the present invention contains, as a glass composition, in terms of mol%, 70% to 85% of $SiO_2$, 3% to 13% of $Al_2O_3$, 0% to 5% of $B_2O_3$, 0.21% to 16% of $Li_2O + Na_2O + K_2O$, 0.1% to 10% of $Li_2O$, 0.1% to 15% of $Na_2O$, 0.01% to 5% of $K_2O$, and 0% to 6% of $MgO + CaO + SrO + BaO$, in which a molar ratio $(Li_2O + Na_2O + K_2O) / Al_2O_3$ is 1 or more, a molar ratio $SiO_2 / Al_2O_3$ is more than 13.2, and a molar ratio $(Li_2O + Na_2O + K_2O + MgO + CaO + SrO + BaO - Al_2O_3) / (SiO_2 + Al_2O_3)$ is less than 0.155.

In the glass for a pharmaceutical container of the present invention, the class in a hydrolytic resistance test (acetone washing) according to ISO 720 is preferably at least HGA 1. Here, the "hydrolytic resistance test (acetone washing) according to ISO 720" refers to the following test.

(1) A glass sample is ground in an alumina mortar and classified into a size of 300 $\mu$m to 425 $\mu$m with a sieve.

(2) The obtained powder sample is washed with acetone and dried in an oven at 140°C.

(3) 10 g of the dried powder sample is placed in a quartz flask, 50 mL of purified water is further added thereto, the flask is covered, followed by treating in an autoclave. The treatment is performed under treatment conditions of increasing the temperature from 100°C to 121°C at a rate of 1 °C/min, then holding the temperature at 121°C for 30 minutes, and lowering the temperature to 100°C at a rate of 0.5 °C/min.

(4) After the autoclave treatment, the solution in the quartz flask is transferred to another beaker, the inside of the quartz flask is further washed three times with 15 mL of purified water, and the washing liquid is also added to the beaker.

(5) A methyl red indicator is added to the beaker, and the mixture is titrated with a 0.02 mol/L hydrochloric acid aqueous solution.

(6) The amount of the 0.02 mol/L hydrochloric acid aqueous solution consumed for the titration is converted to an elution amount of alkali per 1 g of glass by assuming that 1 mL of 0.02 mol/L hydrochloric acid aqueous solution is equivalent to 620 $\mu$g of $Na_2O$.

The expression "the class in a hydrolytic resistance test (acetone washing) according to ISO 720 is at least HGA1" means that the elution amount of alkali per 1 g of glass in terms of $Na_2O$ determined by the above test is 62 $\mu$g/g or less.

In the glass for a pharmaceutical container of the present invention, the working point is preferably 1300°C or less. Here, the "working point" refers to a temperature at which the viscosity of the glass becomes $10^{4.0}$ dPa·s.

A glass tube for a pharmaceutical container of the present invention is preferably formed of the above-described glass for a pharmaceutical container.

A pharmaceutical container of the present invention is preferably formed of the above-described glass for a pharmaceutical container.

BRIEF DESCRIPTION OF DRAWINGS

[FIG. 1] FIG. 1 is a graph obtained by plotting molar ratios $(Li_2O + Na_2O + K_2O + MgO + CaO + SrO + BaO - Al_2O_3) / (SiO_2 + Al_2O_3)$ of the glass samples on a horizontal axis, and hydrolytic resistance test data on a vertical axis, in which R'O in the figure represents $MgO + CaO + SrO + BaO$.

[FIG. 2] FIG. 2 is a graph showing the presence or absence of $MgO + CaO + SrO + BaO$ in different plots in FIG. 1.

[FIG. 3] FIG. 3 is a graph showing data of glass not containing $MgO + CaO + SrO + BaO$ extracted from data shown in FIG. 1.

[FIG. 4] FIG. 4 is a graph showing data of glass containing $MgO + CaO + SrO + BaO$ extracted from the data shown in FIG. 1.

DESCRIPTION OF EMBODIMENTS

The reason why the content range of each ingredient is limited will be described. In the following description, "%" means "mol%" unless otherwise specified.

$SiO_2$ is one of ingredients constituting a network structure of glass. As the content of $SiO_2$ is small, the processability is improved. However, when the content of $SiO_2$ is too small, the hydrolytic resistance is liable to deteriorate, the vitrification becomes difficult, the thermal expansion coefficient increases, and the thermal impact resistance is liable to decrease. Meanwhile, as the content of $SiO_2$ is large, the hydrolytic resistance is improved. However, when the content

of $SiO_2$ is too large, the viscosity of the glass increases, the processability is liable to decrease, the liquidus temperature increases, and the glass is liable to devitrify. Therefore, the content of $SiO_2$ is 70% to 85%, preferably 71% to 84%, 72% to 83%, 73% to 82.5%, 74% to 82%, 75% to 81.5%, particularly preferably 76% to 81%.

$Al_2O_3$ is one of ingredients constituting a network structure of glass, and has an effect of improving the hydrolytic resistance. When the content of $Al_2O_3$ is too small, the hydrolytic resistance is liable to decrease. Meanwhile, when the content of $Al_2O_3$ is too large, the viscosity of the glass increases. Therefore, the content of $Al_2O_3$ is 3% to 13%, preferably 3.5% to 12%, 3.6% to 11%, 3.7% to 10%, 3.8% to 9.5%, 3.9% to 9%, 4% to 8.5%, 4.1% to 8%, 4.2% to 7.8%, 4.3% to 7.5%, 4.4% to 7.3%, particularly preferably 4.5% to 7%.

$B_2O_3$ has an effect of decreasing the viscosity of the glass to enhance the meltability and processability. However, $B_2O_3$ is considered to be one of the factors causing delamination. When the content thereof is too large, the delamination resistance deteriorates, and flakes are liable to occur. Therefore, the content of $B_2O_3$ is 0% to 5%, preferably 0.01% to 4%, 0.02% to 3%, 0.03% to 2%, 0.04% to 1%, 0.04% to 0.8%, particularly preferably 0.05% to 0.5%.

$Li_2O$, $Na_2O$, and $K_2O$, which are alkali metal oxides ($R_2O$), are ingredients that break the network structure of the glass, and have an effect of decreasing the viscosity of the glass to enhance the processability and meltability. The lower limit range of the content of $Li_2O + Na_2O + K_2O$ is 0.1% or more, preferably 0.11% or more, 0.21% or more, 0.5% or more, 1% or more, 2% or more, 3% or more, 4% or more, 4.5% or more, 5% or more, 5.5% or more, 6% or more, 6.5% or more, 7% or more, 7.5% or more, particularly preferably 8% or more. When particularly emphasizing the processability, the lower limit range of the content of $Li_2O + Na_2O + K_2O$ is preferably 8.5% or more, 9% or more, 9.5% or more, 10% or more, 10.5% or more, or 11% or more. Meanwhile, when the content of $Li_2O + Na_2O + K_2O$ is too large, the hydrolytic resistance deteriorates, the thermal expansion coefficient increases, and the thermal impact resistance decreases. Therefore, the upper limit range of the content of $Li_2O + Na_2O + K_2O$ is 18% or less, preferably 17% or less, 16.1% or less, 16% or less, 15.9% or less, 15.5% or less, 15% or less, 14.5% or less, 14% or less, 14.0% or less, 13.9% or less, less than 13.9%, 13.8% or less, less than 13.8%, 13.7% or less, 13.5% or less, particularly preferably 13% or less.

As described above, $Li_2O$ has an effect of decreasing the viscosity of the glass to enhance the processability and the meltability. Among the alkali metal oxides, $Li_2O$ has the highest effect of decreasing the viscosity of the glass, followed by $Na_2O$ and $K_2O$ in that order. However, when the content of $Li_2O$ is too large, the hydrolytic resistance is liable to deteriorate. Therefore, the content of $Li_2O$ is preferably 0% to 9%, 0 to 8.1%, 0% to 8%, 0% to 7%, 0% to 6.8%, 0% to 6.5%, 0% to 6.3%, 0% to 6%, 0% to 5.9%, 0% to 5.8%, 0% to 5.7%, 0% to 5.5%, 0% to 5.0%, 0% to 4.9%, particularly preferably 0% to 4.8%. When the content of $Li_2O$ is 6% or less, devitrification is less likely to occur.

When emphasizing the processability, the content of $Li_2O$ is preferably 0.1% to 9%, 0.5% to 8%, 1% to 7.5%, 2% to 7.4%, 2.5% to 7.3%, 3% to 7.2%, 3.5% to 7.1%, particularly preferably 4% to 7%.

When emphasizing both the hydrolytic resistance and the processability, the content of $Li_2O$ is preferably 2% to 8%, 2.5% to 7%, 3% to 6.5%, 3.1% to 6.3%, 3.3% to 6.2%, 3.5% to 6.1%, particularly preferably 4% to 6%.

Like $Li_2O$, $Na_2O$ has an effect of decreasing the viscosity of the glass to enhance the processability and meltability. When the content of $Na_2O$ is too small, the devitrification resistance may decrease. Meanwhile, when the content of $Na_2O$ is too large, the hydrolytic resistance is liable to deteriorate. Therefore, the content of $Na_2O$ is preferably 0% to 12%, 0% to 10%, 0% to 9%, 0% to 8.5%, 0% to 8.3%, 0% to 8%, 0% to 7.9%, 0% to 7.5%, 0% to 7%, 0% to 6.5%, 0% to 6%, 0% to 5.5%, particularly preferably 0% to 5%.

When emphasizing the processability, the content of $Na_2O$ is preferably 0.1% to 12%, 0.5% to 11%, 1% to 10%, 2% to 9%, 2.5% to 8.5%, 3% to 8%, 3.3% to 7.5%, 3.5% to 7%, 3.8% to 6.5%, particularly preferably 4% to 6%.

$K_2O$ has an effect of decreasing the viscosity of the glass to enhance the processability and meltability, though not as much as the effect of $Li_2O$ and $Na_2O$. However, when the content of $K_2O$ is too large, the hydrolytic resistance is liable to deteriorate. Meanwhile, when the content of $K_2O$ is too small, the devitrification resistance may decrease. Therefore, the content of $K_2O$ is preferably 0% to 5%, 0% to 4%, 0% to 3.8%, 0% to 3.7%, 0% to 3.6%, 0% to 3.5%, 0% to 3.3%, 0% to 3.1%, 0% to 3%, particularly preferably 0% to less than 3%.

When emphasizing the processability, the content of $K_2O$ is preferably 0.01% to 11%, 0.05% to 10%, 0.1% to 8%, 0.5% to 6%, 0.8% to 5.5%, 1% to 5%, 1.2% to 4.5%, 1.4% to 4.3%, particularly preferably 1.5% to 4%.

Among the alkali metal oxides ($R_2O$), $Li_2O$ has the highest effect of decreasing the viscosity of the glass, followed by $Na_2O$ and $K_2O$ in that order. Therefore, from the viewpoint of decreasing the viscosity of the glass, the relationship of the content of the alkali metal oxides is preferably $Li_2O \geq Na_2O \geq K_2O$, $Li_2O \geq Na_2O > K_2O$ or $Li_2O > Na_2O \geq K_2O$, and particularly preferably $Li_2O > Na_2O > K_2O$. When the proportion of $K_2O$ in the alkali metal oxides is too high, it is difficult to achieve both the hydrolytic resistance and processability. Therefore, from the viewpoint of achieving both the hydrolytic resistance and processability, $Na_2O > K_2O$ is preferable.

When the proportion of $Li_2O$ in the alkali metal oxides is too high, the devitrification resistance is liable to decrease. Therefore, from the viewpoint of devitrification resistance, the relationship of the content of the alkali metal oxides is preferably $Na_2O > Li_2O$. $K_2O$ has the highest effect of improving the devitrification resistance, followed by $Na_2O$ and $Li_2O$ in that order. From the viewpoint of achieving both the hydrolytic resistance and devitrification resistance, it is preferably $Li_2O \geq Na_2O \geq K_2O$, $Li_2O \geq K_2O > Na_2O$ or $Li_2O > Na_2O \geq K_2O$, particularly preferably $Li_2O > K_2O > Na_2O$.

As described above, when the proportion of LizO in the alkali metal oxides is too high, the devitrification resistance is liable to decrease. Therefore, from the viewpoint of the devitrification resistance, the upper limit range of a molar ratio LizO / (LizO + $Na_2O$ + $K_2O$) is preferably 0.8 or less, 0.7 or less, 0.6 or less, 0.55 or less, 0.54 or less, 0.53 or less, 0.52 or less, 0.51 or less, 0.5 or less, less than 0.50, 0.49 or less, 0.48 or less, 0.47 or less, 0.46 or less, particularly preferably 0.45 or less.

When the proportion of $K_2O$ in the alkali metal oxides is too high, the effect of decreasing the viscosity of the glass is reduced. Therefore, the upper limit range of a molar ratio $K_2O$ / (LizO + $Na_2O$ + $K_2O$) is preferably 0.6 or less, 0.5 or less, 0.4 or less, 0.24 or less, 0.22 or less, 0.21 or less, particularly preferably 0.2 or less. Meanwhile, when the molar ratio $K_2O$ / ($Li_2O$ + $Na_2O$ + $K_2O$) is too small, the devitrification resistance may decrease. Therefore, the lower limit range of the molar ratio $K_2O$ / (LizO + $Na_2O$ + $K_2O$) is preferably more than 0, 0.01 or more, particularly 0.03 or more, 0.05 or more, 0.8 or more, 0.1 or more, particularly preferably 0.13 or more.

When the content of $Al_2O_3$ is large, the hydrolytic resistance is improved, but the viscosity of the glass increases. When the content of LizO + $Na_2O$ + $K_2O$ is large, the viscosity of the glass decreases, but the hydrolytic resistance deteriorates. Therefore, a molar ratio $Al_2O_3$ / (LizO + $Na_2O$ + $K_2O$) is preferably 50 or less, 40 or less, 30 or less, 20 or less, 10 or less, 5 or less, 3 or less, 2 or less, 1.2 or less, 0 to 1, 0 to 0.85, 0 to 0.8, more than 0 to 0.74, 0.01 to 0.7, 0.1 to 0.67, 0.2 to 0.65, 0.3 to 0.61, 0.35 to 0.60, 0.4 to 0.59, particularly preferably more than 0.4 to 0.55. When the molar ratio $Al_2O_3$ / (LizO + $Na_2O$ + $K_2O$) is out of the above range, it is difficult to achieve both the hydrolytic resistance and the processability. When the molar ratio $Al_2O_3$ / (LizO + $Na_2O$ + $K_2O$) is 0.67 or less, both the hydrolytic resistance and processability are particularly liable to be achieved.

As described above, the alkali metal oxide is an ingredient that decreases the viscosity of the glass and at the same time deteriorates the chemical durability. This is because the alkali metal oxide cuts the network structure of the glass. However, $Al_2O_3$ forms a network structure of glass together with the alkali metal oxide in glass. Therefore, when $Al_2O_3$ is introduced into the glass composition, the role of a part of the alkali metal oxide can be changed from cutting the network structure to forming the network structure. From this, from the viewpoint of emphasizing the hydrolytic resistance, it is preferable that all $Al_2O_3$ forms a bond together with the alkali metal oxide in a stoichiometric ratio. This state is when the value of the molar ratio ($Li_2O$ + $Na_2O$ + $K_2O$) / $Al_2O_3$ is 1 or more. Therefore, as the value of the molar ratio ($Li_2O$ + $Na_2O$ + $K_2O$) / $Al_2O_3$ is closer to 1, the network structure increases, and thus the hydrolytic resistance is improved. Meanwhile, in this state, the processability decreases since the amount of the alkali metal oxide is small. Therefore, from the viewpoint of achieving both the hydrolytic resistance and processability, the lower limit range of the molar ratio (LizO + $Na_2O$ + $K_2O$) / $Al_2O_3$ is 1 or more, preferably 1.5 or more, 1.6 or more, 1.7 or more, 1.8 or more, 1.9 or more, 2 or more, 2.0 or more, 2.1 or more, 2.2 or more, 2.3 or more, 2.4 or more, particularly preferably 2.5 or more. Meanwhile, when the molar ratio (LizO + $Na_2O$ + $K_2O$) / $Al_2O_3$ is too large, the processability is improved, but the hydrolytic resistance is liable to deteriorate. Therefore, the upper limit range of the molar ratio (LizO + $Na_2O$ + $K_2O$) / $Al_2O_3$ is preferably 5 or less, 4 or less, 3.5 or less, 3.4 or less, 3.3 or less, 3.2 or less, 3.1 or less, particularly preferably 3 or less.

When the content of $Al_2O_3$ is too small with respect to SiOz, the hydrolytic resistance is liable to deteriorate and the devitrification resistance is also liable to deteriorate. Therefore, the upper limit range of a molar ratio SiOz / $Al_2O_3$ is preferably 30 or less, 25 or less, 20 or less, 18 or less, 17 or less, 16 or less, particularly preferably 15 or less. When the content of $Al_2O_3$ is too large with respect to SiOz, it becomes difficult to achieve both the hydrolytic resistance and processability. Therefore, the lower limit range of the molar ratio SiOz / $Al_2O_3$ is preferably 10 or more, 11 or more, 12 or more, 12.5 or more, 12.8 or more, 12.9 or more, 13 or more, 13.0 or more, 13.1 or more, or 13.2 or more, particularly preferably more than 13.2.

In order to achieve both the hydrolytic resistance and processability, it is preferable to regulate the ingredient balance between SiOz and the alkali metal oxides. A molar ratio SiOz / (LizO + $Na_2O$ + $K_2O$) is preferably 10 or less, 8 or less, 7.9 or less, 7 or less, 6.9 or less, 6.5 or less, 6.1 or less, 6.0 or less, 5.9 or less, particularly preferably 5.8 or less. In particular, when the molar ratio SiOz / (LizO + $Na_2O$ + $K_2O$) is 6.9 or less, both the hydrolytic resistance and processability are particularly liable to be achieved.

The lower limit range of a molar ratio LizO / ($Na_2O$ + $K_2O$) is preferably 0.1 or more, 0.2 or more, 0.3 or more, 0.4 or more, 0.5 or more, 0.6 or more, particularly preferably 0.7 or more. This makes it possible to prevent the adverse effects of $Na_2O$, which deteriorates the hydrolytic resistance, while accurately enjoying the effects of LizO. Meanwhile, when the molar ratio LizO / ($Na_2O$ + $K_2O$) is too large, the raw material cost increases. Therefore, the upper limit range of the molar ratio LizO / ($Na_2O$ + $K_2O$) is preferably 2.0 or less, 1.5 or less, 1.2 or less, 1.1 or less, 1.0 or less, less than 1.0, 0.9 or less, 0.85 or less, 0.83 or less, particularly preferably 0.82 or less.

MgO, CaO, SrO, and BaO, which are alkaline earth metal oxides (R'O), are ingredients that break the network structure of the glass in the same manner as the alkali metal oxides, and also have the effect of decreasing the viscosity of the glass. In addition, MgO, CaO, SrO, and BaO are ingredients that also affect the hydrolytic resistance. When the content of MgO + CaO + SrO + BaO is too large, not only the hydrolytic resistance is liable to deteriorate, but also the devitrification resistance is liable to decrease, and the alkaline earth metal oxides eluted into the medicament may be precipitated as carbonate or sulfate. Therefore, the content of MgO + CaO + SrO + BaO is 0% to 10%, preferably 0% to 5%, 0% to 4%, 0% to 3.7%, 0% to 3%, 0% to 2%, 0% to 1%, 0% to 0.9%, 0% to 0.8%, 0% to 0.7%, 0% to 0.6%, 0% to 0.5%, 0% to 0.4%, 0% to 0.3%, 0% to 0.2%, 0% to 0.1%, 0% to 0.01%, less than 0.01%, particularly preferably less than 0.001%, from the viewpoint of emphasizing the hydrolytic resistance. From the viewpoint of emphasizing the processability, the content of MgO + CaO + SrO + BaO is preferably 0.01% to 11%, 0.05% to 10%, 0.1% to 9%, 0.5% to 8%, 0.7% to 7%, 0.9% to 6%, 1.0% to 5%, more than 1% to 4.9%, 1.1% to 4.8%, 1.2% to 4.7%, 1.3% to 4.6%, 1.4% to 4.3%, particularly 1.5% to 4%, 1.8% to less than 4%, particularly preferably 1.9% to 3.8%.

The degree of precipitation of carbonate or sulfate of the alkaline earth metal oxides depends on the solubility of each salt. Specifically, the solubility of MgO is the highest, followed by CaO, SrO, and BaO in that order. That is, MgO is most unlikely to cause the precipitation of the salt, and BaO is most likely to cause the precipitation of the salt. Therefore, when focusing on the solubility, the relationship of the content between alkaline earth metal oxides is preferably MgO $\geq$ CaO (particularly MgO > CaO), MgO $\geq$ SrO (particularly MgO > SrO), MgO $\geq$ BaO (particularly MgO > BaO), CaO $\geq$ SrO (particularly CaO > SrO), CaO $\geq$ BaO (particularly CaO > BaO), or SrO $\geq$ BaO (particularly SrO > BaO), more preferably MgO $\geq$ CaO $\geq$ SrO $\geq$ BaO, and still more preferably MgO > CaO > SrO > BaO.

Meanwhile, BaO has the highest effect of decreasing the viscosity of glass, followed by SrO, CaO, and MgO in that order. Therefore, when focusing on the processability, the relationship of the content between the alkaline earth metal oxides is preferably MgO $\leq$ CaO (particularly MgO < CaO), MgO $\leq$ SrO (particularly MgO < SrO), MgO $\leq$ BaO (particularly MgO < BaO), CaO $\leq$ SrO (particularly CaO < SrO), CaO $\leq$ BaO (particularly CaO < BaO), or SrO $\leq$ BaO (particularly SrO < BaO), more preferably MgO $\leq$ CaO $\leq$ SrO $\leq$ BaO, and still more preferably MgO < CaO < SrO < BaO.

As described above, MgO is an ingredient that cause high solubility of carbonate and sulfate and is unlikely to cause salt precipitation. However, since Mg ions are liable to react with hydrated silicic acid, hydrated silicic acid generated on the glass surface and Mg ions may react with each other to form an insoluble magnesium silicate hydrate film when Mg ions in the glass are eluted. This film may be peeled off by vibration or the like to become a flaky insoluble foreign matter. Meanwhile, when the content of MgO is too large, the hydrolytic resistance is liable to deteriorate. Therefore, the content of MgO is preferably 0% to 10%, 0% to 8%, 0% to 5%, 0% to 3%, 0% to 1.5%, 0% to 1%, 0% to 0.9%, 0% to 0.8%, 0% to 0.7%, 0% to 0.6%, 0% to 0.5%, 0% to 0.4%, 0% to 0.3%, 0% to 0.2%, 0% to 0.1%, 0% to 0.05%, 0% to 0.03%, 0% to less than 0.03%, 0% to 0.01%, 0% to less than 0.01%, particularly preferably 0% to less than 0.001%. When emphasizing the processability, MgO may be introduced in an amount of 0.01% or more.

Among the alkaline earth metal oxides, CaO is an ingredient that can achieve both a decrease in the viscosity of glass and a difficulty in precipitation of salts and insoluble foreign matters. However, when the content of CaO is too large, the hydrolytic resistance may decrease. Therefore, the content of CaO is preferably 0% to 10%, 0% to 8%, 0% to 5%, 0% to 3%, 0% to 1%, 0% to 0.9%, 0% to 0.8%, 0% to 0.7%, 0% to 0.6%, 0% to 0.5%, 0% to 0.4%, 0% to 0.3%, 0% to 0.2%, 0% to 0.1%, 0% to 0.05%, 0% to 0.03%, 0% to less than 0.03%, 0% to 0.01%, 0% to less than 0.01%, particularly preferably 0% to less than 0.001%. From the viewpoint of emphasizing the processability, CaO is preferably contained. The content of CaO is preferably more than 0% to 10%, 1% to 10%, 1.2% to 9%, 1.4% to 8%, 1.6% to 7%, 1.8% to 6%, 2% to 5%, 2.2% to 4.8%, 2.4% to 4.6%, 2.6% to 4.4%, 2.8% to 4.2%, 3% to 4%, particularly 3.2% to 3.8%.

When emphasizing the hydrolytic resistance, a molar ratio CaO / (Li$_2$O + Na$_2$O + K$_2$O + MgO + CaO + SrO + BaO) is preferably 0.5 or less, 0.4 or less, 0.3 or less, 0.25 or less, 0.24 or less, 0.23 or less, 0.2 or less, 0.1 or less, 0.05 or less, 0.04 or less, 0.03 or less, 0.025 or less, 0.02 or less, 0.019 or less, 0.018 or less, less than 0.018, 0.015 or less, 0.01 or less, particularly preferably 0.001 or less.

In order to achieve both the hydrolytic resistance and processability, it is preferable to preferentially introduce MgO and CaO that are unlikely to cause precipitation of carbonate or sulfate among the alkaline earth metal oxides. Further, it is preferable to adjust so that the amount of CaO having a high effect of decreasing the viscosity of the glass is relatively large. When emphasizing both the processability and the difficulty in precipitating salts and insoluble foreign matters, it is preferable to increase a value of a molar ratio CaO / (MgO + CaO + SrO + BaO). The lower limit range of the molar ratio CaO / (MgO + CaO + SrO + BaO) is preferably 0.01 or more, 0.03 or more, 0.05 or more, 0.1 or more, 0.2 or more, 0.3 or more, 0.4 or more, 0.5 or more, 0.6 or more, 0.7 or more, 0.8 or more, particularly preferably 0.9 or more.

The content of SrO is preferably 0% to 1%, 0% to 0.9%, 0% to 0.8%, 0% to 0.7%, 0% to 0.6%, 0% to 0.5%, 0% to 0.4%, 0% to 0.3%, 0% to 0.2%, 0% to 0.1%, 0% to 0.01%, 0% to less than 0.01%, particularly preferably 0% to 0.001%. When the content of SrO is too large, carbonate or sulfate is liable to be precipitated, and the hydrolytic resistance is liable to deteriorate.

The content of BaO is preferably 0% to 1%, 0% to 0.9%, 0% to 0.8%, 0% to 0.7%, 0% to 0.6%, 0% to 0.5%, 0% to 0.4%, 0% to 0.3%, 0% to 0.2%, 0% to 0.1%, 0% to 0.01%, 0% to less than 0.01%, particularly preferably 0% to 0.001%. When the content of BaO is too large, carbonate or sulfate is liable to be precipitated, and the hydrolytic resistance is liable to deteriorate.

MgO is an ingredient that cause high solubility of carbonate and sulfate and is unlikely to cause salt precipitation. Meanwhile, Mg ions are liable to react with hydrated silicic acid, which leads to formation of an insoluble magnesium silicate hydrate film. Therefore, a molar ratio MgO / (MgO + CaO + SrO + BaO) is preferably 1 or less, less than 1, 0.9 or less, 0.8 or less, 0.7 or less, 0.6 or less, 0.5 or less, less than 0.5, 0.4 or less, 0.3 or less, 0.2 or less, 0.1 or less, 0.01 or less, particularly preferably 0.001 or less.

From the viewpoint of preventing the formation of an insoluble magnesium silicate hydrate film, a molar ratio MgO / (LizO + Na$_2$O + K$_2$O + MgO + CaO + SrO + BaO) is preferably 0.5 or less, 0.4 or less, 0.3 or less, 0.2 or less, 0.1 or less, 0.09 or less, 0.08 or less, 0.07 or less, 0.06 or less, less than 0.06, 0.05 or less, 0.04 or less, 0.03 or less, 0.02 or less, 0.01 or less, particularly preferably 0.001 or less.

From the viewpoint of emphasizing the hydrolytic resistance, a molar ratio (MgO + CaO + SrO + BaO) / (LizO + Na$_2$O + K$_2$O + MgO + CaO + SrO + BaO) is preferably 0.5 or less, 0.4 or less, 0.3 or less, 0.2 or less, 0.1 or less, 0.09 or less, 0.08 or less, 0.07 or less, 0.06 or less, less than 0.06, 0.05 or less, 0.04 or less, 0.03 or less, 0.02 or less, 0.01 or less, particularly preferably 0.001 or less.

The content of MgO + CaO is preferably 0% to 10%, 0% to 5%, 0% to 4%, 0% to 3.7%, 0% to 3%, 0% to 2%, 0% to 1%, 0% to 0.9%, 0% to 0.8%, 0% to 0.7%, 0% to 0.6%, 0% to 0.5%, 0% to 0.4%, 0% to 0.3%, 0% to 0.2%, 0% to 0.1%, 0% to 0.01%, 0% to less than 0.01%, particularly preferably 0% to 0.001%. When the content of MgO + CaO is too large, carbonate or sulfate is liable to be precipitated. "MgO + CaO" refers to the total content of MgO and CaO.

As described above, MgO leads to formation of an insoluble magnesium silicate hydrate film. CaO is an ingredient that is less likely to react with SiOz than MgO, and that is less likely to lead to formation of an insoluble film. Therefore, from the viewpoint of enhancing the safety of the pharmaceutical container, a molar ratio MgO / CaO is preferably less than 9.0, 8.0 or less, 6.0 or less, less than 5.0, less than 3.0, 1.0 or less, less than 1.0, 0.9 or less, less than 0.7, less than 0.5, less than 0.4, less than 0.3, less than 0.2, particularly preferably less than 0.1. When the molar ratio MgO / CaO is too large, the hydrolytic resistance is liable to deteriorate.

In order to achieve both the hydrolytic resistance and processability, it is preferable to regulate a molar ratio LizO / CaO when emphasizing the content of LizO in order to balance the ingredients of LizO and CaO. The molar ratio LizO / CaO is preferably 100 or less, 90 or less, 80 or less, 70 or less, 60 or less, 50 or less, 40 or less, 30 or less, 20 or less, 10 or less, 9 or less, 8 or less, 7 or less, 6 or less, 5 or less, 4 or less, 3.5 or less, 3.4 or less, 3.3 or less, 3.2 or less, 3.1 or less, 3 or less, 2 or less, 1.8 or less, 1.7 or less, 1.6 or less, particularly preferably 1.5 or less.

In order to achieve both the hydrolytic resistance and processability, it is preferable to regulate the molar ratio CaO / LizO when emphasizing the content of CaO in order to balance the ingredients of LizO and CaO. The molar ratio CaO / LizO is preferably 2.0 or less, 1.5 or less, 1.2 or less, 1.1 or less, 1.0 or less, less than 1.0, 0.9 or less, 0.8 or less, 0.7 or less, 0.6 or less, 0.5 or less, 0.4 or less, 0.3 or less, 0.2 or less, 0.1 or less, particularly preferably 0.001 or less.

The content of SiOz + Al$_2$O$_3$ + LizO + Na$_2$O + K$_2$O + MgO + CaO + SrO + BaO is preferably 90% or more, 93% or more, 95% or more, 96% or more, 97% or more, 98% or more, 98.5% or more, particularly preferably 99% or more. When the content of SiOz + Al$_2$O$_3$ + Li$_2$O + Na$_2$O + K$_2$O + MgO + CaO + SrO + BaO is too small, it is difficult to achieve both the hydrolytic resistance and processability.

A molar ratio (LizO + Na$_2$O + K$_2$O + MgO + CaO + SrO + BaO - Al$_2$O$_3$) / (SiOz + Al$_2$O$_3$) is a ratio of the ingredient that cuts the network structure in the glass to the ingredient that forms the network structure in the glass. As described above, the alkali metal oxides and the alkaline earth metal oxides have an effect of cutting the network structure in the glass, but the alkali metal oxides in the same amount as the content of Al$_2$O$_3$ are not effective in cutting the network since Al$_2$O$_3$ forms the network structure in the glass together with the alkali metal oxide. Further, SiOz and Al$_2$O$_3$ are ingredients that form the network structure in the glass. Accordingly, as the molar ratio (LizO + Na$_2$O + K$_2$O + MgO + CaO + SrO + BaO - Al$_2$O$_3$) / (SiOz + Al$_2$O$_3$) is smaller, the ingredient that cuts the network structure is smaller with respect to the ingredient that forms the network structure, so that the chemical durability, particularly the hydrolytic resistance, is improved. Therefore, the upper limit range of the molar ratio (LizO + Na$_2$O + K$_2$O + MgO + CaO + SrO + BaO - Al$_2$O$_3$) / (SiO$_2$ + Al$_2$O$_3$) is 0.2 or less, preferably 0.19 or less, 0.018 or less, 0.17 or less, 0.16 or less, less than 0.159, 0.158 or less, 0.157 or less, 0.156 or less, less than 0.155, 0.15 or less, 0.14 or less, 0.13 or less, 0.12 or less, particularly preferably 0.11 or less. In particular, when the molar ratio (LizO + Na$_2$O + K$_2$O + MgO + CaO + SrO + BaO - Al$_2$O$_3$) / (SiOz + Al$_2$O$_3$) is 0.156 or less, both the hydrolytic resistance and processability are particularly liable to be achieved. Meanwhile, when the molar ratio (LizO + Na$_2$O + K$_2$O + MgO + CaO + SrO + BaO - Al$_2$O$_3$) / (SiOz + Al$_2$O$_3$) is too small, the viscosity of the glass is liable to increase. Therefore, the lower limit range of the molar ratio (LizO + Na$_2$O + K$_2$O + MgO + CaO + SrO + BaO - Al$_2$O$_3$) / (SiOz + Al$_2$O$_3$) is preferably 0 or more, 0.01 or more, 0.02 or more, 0.03 or more, 0.04 or more, 0.05 or more, 0.06 or more, 0.07 or more, 0.08 or more, 0.09 or more, particularly preferably 0.1 or more.

In addition to the above ingredients, other ingredients may be introduced.

ZrOz is an ingredient that enhances alkali resistance. However, when the content of ZrOz is too large, the viscosity of the glass increases, and the devitrification resistance is liable to decrease. Therefore, the content of ZrOz is preferably 0% to 3%, 0% to 2.5%, 0% to 2%, 0% to 1.5%, 0.1% to 0.8%, particularly preferably 0.2% to 0.6%.

ZnO has an effect of decreasing the viscosity of glass. However, when the content of ZnO is too large, the hydrolytic resistance is adversely affected. Therefore, the content of ZnO is preferably 0% to 4%, 0% to 1%, particularly preferably 0% to 0.01%.

When the glass is desired to be colored, $TiO_2$ and $Fe_2O_3$ may be added to the batch raw material. In this case, the total content and individual content of $TiO_2$ and $Fe_2O_3$ are preferably 7% or less, 6% or less, more than 0% to 5%, 0.001% to 1%, particularly preferably 0.1% to 0.5%.

$TiO_2$ and $Fe_2O_3$ are also ingredients contained as impurities in the $SiO_2$ raw material, for example. Therefore, $TiO_2$ and $Fe_2O_3$ may be contained in the glass even when the glass is not colored. When the glass is not colored, the content of $TiO_2$ is preferably 0.1% or less, 0.08% or less, 0.05% or less, 0.03% or less, 0.01% or less, particularly preferably 0.005% or less, and the content of $Fe_2O_3$ is preferably 0.1% or less, 0.08% or less, 0.05% or less, 0.03% or less, 0.01% or less, particularly preferably 0.005% or less.

As a fining agent, one or more kinds of F, Cl, $Sb_2O_3$, $SnO_2$, $SO_3$ and the like may be introduced. The total content and individual content of these fining agents are preferably 5% or less, 1% or less, 0.5% or less, particularly preferably 0.3% or less. Note that, even when Cl is not added as a fining agent, Cl may be contained in the glass as impurities contained in the batch raw material. When the content of Cl is too large, white defects are likely to occur when the glass is subjected to heat processing. Therefore, the content of Cl is preferably 0.1% or less, 0.05% or less, 0.01% or less, 0.005% or less, particularly preferably 0.04% or less.

In order to improve chemical durability, viscosity in high temperature and the like, $P_2O_5$, $Cr_2O_3$, PbO, $La_2O_3$, $WO_3$, $Nb_2O_5$, $Y_2O_3$, and the like may be introduced at 3% or less, 2% or less, 1% or less, less than 1%, or 0.5% or less each.

As impurities, ingredients such as $H_2$, $CO_2$, CO, $H_2O$, He, Ne, Ar, and $N_2$ may be introduced up to 0.1% each. The amount of noble metal elements such as Pt, Rh, and Au to be mixed is preferably 500 ppm or less, and more preferably 300 ppm or less.

In the glass for a pharmaceutical container of the present invention, the class in a hydrolytic resistance test (acetone washing) according to ISO 720 is preferably at least HGA2, and particularly preferably HGA1.

An elution amount of alkali in terms of $Na_2O$ determined by the hydrolytic resistance test (acetone washing) according to ISO 720 is preferably less than 527 $\mu$g/g, 200 $\mu$g/g or less, 100 $\mu$g/g or less, 90 $\mu$g/g or less, 80 $\mu$g/g or less, 70 $\mu$g/g or less, less than 62 $\mu$g/g, 60 $\mu$g/g or less, 57 $\mu$g/g or less, 55 $\mu$g/g or less, 53 $\mu$g/g or less, particularly preferably 50 $\mu$g/g or less. In a case where the elution amount of alkali is too large, the medicament ingredient may be changed in quality due to the alkali component eluted from the glass when the glass is processed into an ampoule or a vial, filled with and stores medicaments.

Further, the alkali resistance in a test according to ISO 695 is preferably at least class 2. Here, the "alkali resistance test according to ISO 695" refers to the following test.

(1) A sample is prepared which has a surface area $Acm^2$ (where A is 10 $cm^2$ to 15 $cm^2$) and in which the entire surface is mirror-finished. First, as a pretreatment, hydrofluoric acid (40 mass%) and hydrochloric acid (2 mol/L) are mixed at a volume ratio of 1 : 9 to prepare a solution. The sample is immersed in the solution, followed by stirring with a magnetic stirrer for 10 minutes. The sample is taken out, ultrasonic washing with purified water for 2 minutes is performed three times, and ultrasonic washing with ethanol for 1 minute is performed twice.
(2) Thereafter, the sample is dried in an oven at 110°C for 1 hour, and is allowed to cool in a desiccator for 30 minutes.
(3) The mass m1 of the sample is measured and recorded to an accuracy of $\pm$ 0.1 mg.
(4) An sodium hydroxide aqueous solution (1 mol/L) and a sodium carbonate aqueous solution (0.5 mol/L) are mixed at a volume ratio of 1 : 1 to prepare 800 mL of a solution. The solution is placed in a stainless steel container and boiled by a mantle heater. Next, after the sample suspended by a platinum wire is put thereto and held for 3 hours, the sample is taken out, ultrasonic washing with purified water for 2 minutes is performed three times, and ultrasonic washing with ethanol for 1 minute is performed twice. Thereafter, the sample is dried in an oven at 110°C for 1 hour, and is allowed to cool in a desiccator for 30 minutes.
(5) The mass m2 of the sample is measured and recorded to an accuracy of $\pm$ 0.1 mg.
(6) From the masses m1 and m2 (mg) before and after the introduction into the boiling alkaline solution and the surface area A ($cm^2$) of the sample, a mass loss amount per unit area is calculated by the following calculation formula, and the calculated mass loss amount is used as a measurement value of the alkali resistance test.

$$(\text{Mass loss amount per unit area}) = 100 \times (m1 - m2) / A$$

The "alkali resistance in the test according to ISO 695 is class 2" means that the mass loss amount per unit area determined as described above is 175 $mg/dm^2$ or less. When the mass loss amount per unit area determined as described above is 75 $mg/dm^2$ or less, "alkali resistance in a test according to ISO 695 is class 1". In the glass for a pharmaceutical container of the present invention, the mass loss amount per unit area is preferably 130 $mg/dm^2$ or less, particularly preferably 75 $mg/dm^2$ or less.

The delamination often occurs when a glass container is filled with and stores medicaments in which a solution (e.g., citric acid, a phosphate buffer solution) is used that exhibits a behavior such as a strong alkaline solution even when the pH is around neutral. When the mass loss amount per unit area determined by the test according to ISO 695 is more than 175 mg/dm$^2$, the delamination is more likely to occur. Therefore, in the glass for a pharmaceutical container of the present invention, the mass loss amount per unit area is preferably 130 mg/dm$^2$ or less, particularly preferably 75 mg/dm$^2$ or less.

In an acid resistance test according to YBB BR > 00342004, the mass loss amount per unit area is preferably 1.5 mg/dm$^2$ or less, particularly preferably 0.7 mg/dm$^2$ or less. In a case where the mass loss amount is large, the elution amount of the glass component is significantly increased when a pharmaceutical container such as an ampoule or a vial is prepared, then is filled with and stores aqueous-based medicaments, and the aqueous-based medicament ingredient is caused to be changed in quality.

The "acid resistance test according to YBB00342004" refers to the following test.

(1) A sample is prepared which has a surface area Acm$^2$ (where A is 100 $\pm$ 5 cm$^2$) and in which the entire surface is mirror-finished. First, as a pretreatment, hydrofluoric acid (40 mass%) and hydrochloric acid (2 mol/L) are mixed at a volume ratio of 1 : 9 to prepare a solution. The sample is immersed in the solution, followed by stirring with a magnetic stirrer for 10 minutes. The sample is taken out, ultrasonic washing with purified water for 2 minutes is performed three times, and ultrasonic washing with ethanol for 1 minute is performed twice.
(2) Thereafter, the sample is dried in an oven at 110°C for 1 hour, and is allowed to cool in a desiccator for 30 minutes.
(3) The mass m1 of the sample is measured and recorded to an accuracy of $\pm$ 0.1 mg.
(4) 800 mL of a hydrochloric acid solution (6 mol/L) is prepared. The hydrochloric acid solution is put in a container formed of silica glass and boiled by an electric heater. A sample suspended by a platinum wire is put thereto and held for 6 hours. The sample is taken out, ultrasonic washing with purified water for 2 minutes is performed three times, and ultrasonic washing with ethanol for 1 minute is performed twice. Thereafter, the sample is dried in an oven at 110°C for 1 hour, and is allowed to cool in a desiccator for 30 minutes.
(5) The mass m2 of the sample is measured and recorded to an accuracy of $\pm$ 0.1 mg.
(6) From the masses m1 and m2 (mg) before and after the introduction into the boiling acid solution and the surface area A (cm$^2$) of the sample, a half of the mass loss amount per unit area is calculated by the following calculation formula, and is used as a measurement value of the acid resistance test.

$$\text{(Mass loss amount per unit area} = 1/2 \times 100 \times (m1 - m2) / A$$

In the glass for a pharmaceutical container of the present invention, the working point is preferably 1350°C or less, 1300°C or less, 1260°C or less, particularly preferably 1250°C or less. When the working point is high, the processing temperature at the time of processing the glass tube into an ampoule or a vial becomes higher, and the volatilization of the alkali component contained in the glass significantly increases. The volatilized alkali component adheres to the inner wall of the glass tube, and the glass tube in this state is processed into a glass container. Such a glass container becomes a cause of changing the medicaments in quality when the glass container is filled with and stores the medicaments. In addition, in the case of glass containing a large amount of boron, the higher the working point is, the higher the volatilization of boron is, which may cause delamination.

The glass for a pharmaceutical container of the present invention can be subjected to chemical strengthening (ion exchanging) to form a compression stress layer on the surface thereof. In the glass for a pharmaceutical container of the present invention, a compression stress value of the compression stress layer formed when the glass for a pharmaceutical container is subjected to chemical strengthening by being immersed in a KNO$_3$ molten salt at 475°C for 7 hours is preferably 100 MPa or more, more preferably 200 MPa or more, and particularly preferably 300 MPa or more. Further, a stress depth of the compression stress layer formed when the glass for a pharmaceutical container is subjected to chemical strengthening by being immersed in the KNO$_3$ molten salt at 475°C for 7 hours is preferably 10 $\mu$m or more, more preferably 20 $\mu$m or more, and particularly preferably 30 $\mu$m or more.

The compression stress value and the stress depth of the compression stress layer can be measured as follows. First, both surfaces of a sample are mirror-polished, and then the sample is immersed in a KNO$_3$ molten salt at 475°C for 7 hours to perform chemical strengthening. Subsequently, the surface of the sample is washed, and the compression stress value and the stress depth are calculated based on the number of interference fringes observed using a surface stress meter (FSM-6000 manufactured by Orihara Seisakusho Co., Ltd.) and an interval between the interference fringes. In the calculation, a refractive index of the sample is 1.50, and a photoelastic constant is 29.5 [(nm/cm)/MPa]. Note that, before and after the chemical strengthening, the glass composition in the glass surface layer is microscopically different, but the glass composition is not substantially different as a whole of the glass.

Next, a method for manufacturing the glass tube for a pharmaceutical container of the present invention will be described by a Danner process.

First, a glass raw material is blended so as to have a predetermined glass composition to prepare a batch.

Next, this batch is continuously charged into a melting kiln at 1550°C to 1700°C to perform melting and fining. Then, while the obtained molten glass is wound around a rotating refractory, air is blown out from a front end portion of the refractory, and the glass is drawn out in a tubular shape from the front end portion of the refractory.

Subsequently, the drawn tubular glass is cut to a predetermined length to obtain a glass tube. The glass tube thus obtained is used for manufacturing a pharmaceutical container such as a vial or an ampoule.

The manufacturing of the glass tube for a pharmaceutical container of the present invention is not limited to the Danner process. The glass tube for a pharmaceutical container may be manufactured by another method (for example, a Vello process or a down-draw method).

Next, a method for manufacturing the pharmaceutical container of the present invention will be described. Hereinafter, a method of manufacturing a pharmaceutical container by processing a glass tube by a vertical processing method will be described, but this method is an example.

First, after a glass tube is prepared, an end portion on one side of the glass tube is heated by a burner in a state where the glass tube stands vertically, and a shoulder portion and a mouth portion are formed by using a forming tool. Next, a portion of the glass tube above the shoulder portion is heated and fused with a burner. Subsequently, the fused portion is heated and formed with a burner to form a bottom portion, thereby obtaining a pharmaceutical container.

The fused portion on the glass tube side is opened by heating with a burner, and is used for manufacturing the next pharmaceutical container. By repeating such processing, a plurality of pharmaceutical containers can be obtained from the glass tube.

If necessary, a chemical strengthened pharmaceutical container can be obtained by immersing a pharmaceutical container such as an ampoule or a vial in a $KNO_3$ molten salt and performing ion exchange.

The glass tube for a pharmaceutical container and the pharmaceutical container may have a coating on an inner surface and/or an outer surface thereof. Examples of the coating include inorganic coating such as fluorine, silicon, and a surfactant, and organic coating. Example

Hereinafter, the present invention will be described based on examples. The following examples are merely illustrative and do not limit the present invention.

Tables 1 to 6 show examples (sample Nos. 1 to 69) of the present invention. In the tables, "$R_2O$" means $LizO + Na_2O + KzO$, "R'O" means $MgO + CaO + SrO + BaO$, and "N.A." means unmeasured.

[Table 1]

| [mol%] | No.1 | No.2 | No.3 | No.4 | No.5 | No.6 | No.7 | No.8 | No.9 | No. 10 | No. 11 | No. 12 |
|---|---|---|---|---|---|---|---|---|---|---|---|---|
| $SiO_2$ | 78.7 | 79.6 | 80.1 | 80.5 | 79.7 | 78.7 | 78.7 | 77.9 | 82.8 | 79.6 | 80.9 | 82.2 |
| $Al_2O_3$ | 6.8 | 5.9 | 5.4 | 5.0 | 5.0 | 5.0 | 4.5 | 4.5 | 3.8 | 4.9 | 4.6 | 4.3 |
| $B_2O_3$ | 0.1 | 0.1 | 0.1 | 0.1 | 0.1 | 0.1 | 0.1 | 0.1 | 0.0 | 0.1 | 0.1 | 0.1 |
| $Li_2O$ | 6.1 | 6.1 | 6.1 | 6.1 | 4.8 | 4.8 | 4.8 | 4.8 | 6.1 | 6.1 | 6.1 | 6.1 |
| $Na_2O$ | 4.9 | 4.9 | 4.9 | 4.9 | 3.6 | 4.6 | 4.6 | 4.6 | 3.9 | 5.9 | 4.9 | 3.9 |
| $K_2O$ | 2.7 | 2.7 | 2.7 | 2.7 | 2.7 | 2.7 | 3.2 | 4.0 | 2.7 | 2.7 | 2.7 | 2.7 |
| MgO | 0.0 | 0.0 | 0.0 | 0.0 | 0.0 | 0.0 | 0.0 | 0.0 | 0.0 | 0.0 | 0.0 | 0.0 |
| CaO | 0.0 | 0.0 | 0.0 | 0.0 | 3.4 | 3.4 | 3.4 | 3.4 | 0.0 | 0.0 | 0.0 | 0.0 |
| SrO | 0.0 | 0.0 | 0.0 | 0.0 | 0.0 | 0.0 | 0.0 | 0.0 | 0.0 | 0.0 | 0.0 | 0.0 |
| BaO | 0.0 | 0.0 | 0.0 | 0.0 | 0.0 | 0.0 | 0.0 | 0.0 | 0.0 | 0.0 | 0.0 | 0.0 |
| $ZrO_2$ | 0.5 | 0.5 | 0.5 | 0.5 | 0.5 | 0.5 | 0.5 | 0.5 | 0.5 | 0.5 | 0.5 | 0.5 |
| $SnO_2$ | 0.2 | 0.2 | 0.2 | 0.2 | 0.2 | 0.2 | 0.2 | 0.2 | 0.2 | 0.2 | 0.2 | 0.2 |
| $Fe_2O_3$ | 0.008 | 0.007 | 0.008 | 0.008 | 0.008 | 0.007 | 0.007 | 0.007 | 0.008 | 0.008 | 0.008 | 0.010 |
| $TiO_2$ | 0.007 | 0.007 | 0.007 | 0.007 | 0.005 | 0.007 | 0.005 | 0.005 | 0.007 | 0.009 | 0.007 | 0.005 |
| Cl | 0.004 | 0.004 | 0.004 | 0.003 | 0.004 | 0.004 | 0.004 | 0.004 | 0.003 | 0.003 | 0.003 | 0.003 |
| $SiO_2+Al_2O_3+R_2O+R'O$ | 99.2 | 99.2 | 99.2 | 99.2 | 99.2 | 99.2 | 99.2 | 99.2 | 99.3 | 99.2 | 99.2 | 99.2 |
| $R_2O$ | 13.7 | 13.7 | 13.7 | 13.7 | 11.1 | 12.1 | 12.6 | 13.4 | 12.7 | 14.7 | 13.7 | 12.7 |
| $R'O$ | 0.0 | 0.0 | 0.0 | 0.0 | 3.4 | 3.4 | 3.4 | 3.4 | 0.0 | 0.0 | 0.0 | 0.0 |
| $R_2O/Al_2O_3$ | 2.015 | 2.322 | 2.537 | 2.740 | 2.220 | 2.420 | 2.800 | 2.978 | 3.342 | 3.000 | 2.978 | 2.953 |
| $Li_2O / R_2O$ | 0.445 | 0.445 | 0.445 | 0.445 | 0.432 | 0.397 | 0.381 | 0.358 | 0.480 | 0.415 | 0.445 | 0.480 |
| $Li_2O / CaO$ | - | - | - | - | 1.412 | 1.412 | 1.412 | 1.412 | - | - | - | - |
| $CaO / R'O$ | - | - | - | - | 1.000 | 1.000 | 1.000 | 1.000 | - | - | - | - |
| $CaO / (R_2O + R'O)$ | 0.000 | 0.000 | 0.000 | 0.000 | 0.234 | 0.219 | 0.213 | 0.202 | 0.000 | 0.000 | 0.000 | 0.000 |
| $R'O / (R_2O+R'O)$ | 0.000 | 0.000 | 0.000 | 0.000 | 0.234 | 0.219 | 0.213 | 0.202 | 0.000 | 0.000 | 0.000 | 0.000 |
| $SiO_2 / Al_2O_3$ | 11.574 | 13.492 | 14.833 | 16.100 | 15.940 | 15.740 | 17.489 | 17.311 | 21.789 | 16.245 | 17.587 | 19.116 |

(continued)

| [mol%] | No.1 | No.2 | No.3 | No.4 | No.5 | No.6 | No.7 | No.8 | No.9 | No. 10 | No. 11 | No. 12 |
|---|---|---|---|---|---|---|---|---|---|---|---|---|
| $(R_2O + R'O - Al_2O_3) / (SiOz + Al_2O_3)$ | 0.081 | 0.091 | 0.097 | 0.102 | 0.112 | 0.125 | 0.138 | 0.149 | 0.103 | 0.116 | 0.106 | 0.097 |
| Ps [°C] | N.A. | N.A. | N.A. | N.A. | N.A. | N.A. | N.A. | N.A. | N.A. | N.A. | N.A. | N.A. |
| Ta [°C] | N.A. | N.A. | N.A. | N.A. | N.A. | N.A. | N.A. | N.A. | N.A. | N.A. | N.A. | N.A. |
| Ts [°C] | N.A. | N.A. | N.A. | N.A. | N.A. | N.A. | N.A. | N.A. | N.A. | N.A. | N.A. | N.A. |
| Working point ($10^{4.0}$ dPa s) [°C] | N.A. | N.A. | N.A. | N.A. | N.A. | N.A. | N.A. | N.A. | N.A. | N.A. | N.A. | N.A. |
| $10^{3.0}$ dPa s [°C] | N.A. | N.A. | N.A. | N.A. | N.A. | N.A. | N.A. | N.A. | N.A. | N.A. | N.A. | N.A. |
| Hydrolytic resistance test [$\mu$g/g] | 33.5 | 37.5 | 39.4 | 45.0 | 45.3 | 56.1 | 71.3 | 92.7 | 49.0 | 61.1 | 49.6 | 42.5 |
| Acid resistance test (DIN12116) [mg/dm$^2$] | N.A. | N.A. | N.A. | N.A. | N.A. | N.A. | N.A. | N.A. | N.A. | N.A. | N.A. | N.A. |
| Alkali resistance test (ISO695) [mg/dm$^2$] | N.A. | N.A. | N.A. | N.A. | N.A. | N.A. | N.A. | N.A. | N.A. | N.A. | N.A. | N.A. |
| Linear thermal expansion coefficient (20 to 300°C) | N.A. | N.A. | N.A. | N.A. | N.A. | N.A. | N.A. | N.A. | N.A. | N.A. | N.A. | N.A. |
| Liquidus temperature [°C] | N.A. | N.A. | N.A. | N.A. | N.A. | N.A. | N.A. | N.A. | N.A. | N.A. | N.A. | N.A. |
| log $\eta$ at TL [dPa·s] | N.A. | N.A. | N.A. | N.A. | N.A. | N.A. | N.A. | N.A. | N.A. | N.A. | N.A. | N.A. |

[Table 2]

| [mol%] | No. 13 | No. 14 | No. 15 | No. 16 | No. 17 | No. 18 | No. 19 | No.20 | No.21 | No.22 | No.23 | No.24 |
|---|---|---|---|---|---|---|---|---|---|---|---|---|
| $SiO_2$ | 72.8 | 74.8 | 77.3 | 77.8 | 77.1 | 79.4 | 77.6 | 77.6 | 77.3 | 77.3 | 77.8 | 76.8 |
| $Al_2O_3$ | 12.5 | 11.5 | 9.0 | 8.5 | 6.0 | 6.0 | 6.0 | 6.0 | 6.2 | 6.1 | 6.0 | 6.0 |
| $B_2O_3$ | 0.1 | 0.1 | 0.1 | 0.1 | 0.1 | 0.1 | 0.1 | 0.1 | 0.1 | 0.1 | 0.1 | 0.1 |
| $Li_2O$ | 6.1 | 6.1 | 6.1 | 6.1 | 6.1 | 6.1 | 6.2 | 6.1 | 6.3 | 6.1 | 6.1 | 6.1 |
| $Na_2O$ | 5.1 | 4.1 | 4.1 | 4.1 | 5.9 | 5.9 | 5.8 | 5.9 | 5.8 | 4.9 | 5.8 | 5.9 |
| $K_2O$ | 2.7 | 2.7 | 2.7 | 2.7 | 1.9 | 1.9 | 1.5 | 1.5 | 1.5 | 1.9 | 0.0 | 0.0 |
| $MgO$ | 0.0 | 0.0 | 0.0 | 0.0 | 0.0 | 0.0 | 0.0 | 0.0 | 0.0 | 0.0 | 0.0 | 1.5 |
| $CaO$ | 0.0 | 0.0 | 0.0 | 0.0 | 2.4 | 0.0 | 2.3 | 2.3 | 2.3 | 3.1 | 3.6 | 3.0 |
| $SrO$ | 0.0 | 0.0 | 0.0 | 0.0 | 0.0 | 0.0 | 0.0 | 0.0 | 0.0 | 0.0 | 0.0 | 0.0 |
| $BaO$ | 0.0 | 0.0 | 0.0 | 0.0 | 0.0 | 0.0 | 0.0 | 0.0 | 0.0 | 0.0 | 0.0 | 0.0 |
| $ZrO_2$ | 0.5 | 0.5 | 0.5 | 0.5 | 0.5 | 0.5 | 0.5 | 0.5 | 0.5 | 0.5 | 0.5 | 0.5 |
| $SnO_2$ | 0.2 | 0.2 | 0.2 | 0.2 | 0.0 | 0.1 | 0.0 | 0.0 | 0.0 | 0.0 | 0.1 | 0.1 |
| $Fe_2O_3$ | 0.007 | 0.007 | 0.007 | 0.007 | N.A. | N.A. | 0.005 | 0.005 | 0.005 | 0.005 | 0.005 | 0.006 |
| $TiO_2$ | 0.007 | 0.007 | 0.007 | 0.007 | N.A. | N.A. | 0.010 | 0.010 | 0.010 | 0.010 | 0.010 | 0.010 |
| $Cl$ | 0.004 | 0.004 | 0.004 | 0.004 | N.A. | N.A. | 0.014 | 0.016 | 0.016 | 0.014 | 0.014 | 0.016 |
| $SiO_2 + Al_2O_3 + R_2O + R'O$ | 99.2 | 99.2 | 99.2 | 99.2 | 99.4 | 99.3 | 99.4 | 99.4 | 99.4 | 99.4 | 99.3 | 99.3 |
| $R_2O$ | 13.9 | 12.9 | 12.9 | 12.9 | 13.9 | 13.9 | 13.5 | 13.5 | 13.6 | 12.9 | 11.9 | 12.0 |
| $R'O$ | 0.0 | 0.0 | 0.0 | 0.0 | 2.4 | 0.0 | 2.3 | 2.3 | 2.3 | 3.1 | 3.6 | 4.5 |
| $R_2O / Al_2O_3$ | 1.112 | 1.122 | 1.433 | 1.518 | 2.317 | 2.317 | 2.250 | 2.250 | 2.194 | 2.115 | 1.983 | 2.000 |
| $Li_2O / R_2O$ | 0.439 | 0.473 | 0.473 | 0.473 | 0.439 | 0.439 | 0.459 | 0.452 | 0.463 | 0.473 | 0.513 | 0.508 |
| $Li_2O / CaO$ | - | - | - | - | 2.542 | - | 2.696 | 2.652 | 2.739 | 1.968 | 1.694 | 2.033 |
| $CaO / R'O$ | - | - | - | - | 1.000 | - | 1.000 | 1.000 | 1.000 | 1.000 | 1.000 | 1.000 |
| $CaO / (R_2O+R'O)$ | 0.000 | 0.000 | 0.000 | 0.000 | 0.147 | 0.000 | 0.146 | 0.146 | 0.145 | 0.194 | 0.232 | 0.182 |
| $R'O / (R_2O+R'O)$ | 0.000 | 0.000 | 0.000 | 0.000 | 0.147 | 0.000 | 0.146 | 0.146 | 0.145 | 0.194 | 0.232 | 0.273 |
| $SiO_2 / Al_2O_3$ | 5.824 | 6.504 | 8.589 | 9.153 | 12.850 | 13.233 | 12.933 | 12.933 | 12.468 | 12.672 | 12.967 | 12.800 |

(continued)

| [mol%] | No. 13 | No. 14 | No. 15 | No. 16 | No. 17 | No. 18 | No. 19 | No.20 | No.21 | No.22 | No.23 | No.24 |
|---|---|---|---|---|---|---|---|---|---|---|---|---|
| $(R_2O + R'O - Al_2O_3) / (SiOz + Al_2O_3)$ | 0.016 | 0.016 | 0.045 | 0.051 | 0.124 | 0.093 | 0.117 | 0.117 | 0.116 | 0.119 | 0.113 | 0.127 |
| Ps [°C] | N.A. | N.A. | N.A. | N.A. | N.A. | N.A. | 479 | 479 | 479 | 487 | 499 | 494 |
| Ta [°C] | N.A. | N.A. | N.A. | N.A. | N.A. | N.A. | 524 | 523 | 524 | 532 | 544 | 539 |
| Ts [°C] | N.A. | N.A. | N.A. | N.A. | N.A. | N.A. | 758 | 758 | 758 | 767 | 779 | 777 |
| Working point ($10^{4.0}$ dPa s) [°C] | N.A. | N.A. | N.A. | N.A. | 1176 | 1219 | 1178 | 1180 | 1178 | 1186 | 1198 | 1197 |
| $10^{3.0}$ dPa·s [°C] | N.A. | N.A. | N.A. | N.A. | 1408 | 1464 | 1411 | 1411 | 1410 | 1418 | 1428 | 1422 |
| Hydrolytic resistance test [$\mu$g/g] | 40.6 | 36.0 | 33.8 | 31.3 | 58.9 | 39.4 | 55.2 | 57.0 | 54.9 | 54.7 | 53.1 | 55.2 |
| Acid resistance test (DIN12116) [mg/dm$^2$] | N.A. | N.A. | N.A. | N.A. | N.A. | N.A. | N.A. | N.A. | N.A. | N.A. | N.A. | N.A. |
| Alkali resistance test (ISO695)[mg/dm$^2$] | N.A. | N.A. | N.A. | N.A. | N.A. | N.A. | N.A. | N.A. | N.A. | N.A. | N.A. | N.A. |
| Linear thermal expansion coefficient (20 to 300°C) | N.A. | N.A. | N.A. | N.A. | N.A. | N.A. | N.A. | N.A. | N.A. | N.A. | N.A. | N.A. |
| Liquidus temperature [°C] | N.A. | N.A. | N.A. | N.A. | N.A. | N.A. | N.A. | N.A. | N.A. | N.A. | N.A. | N.A. |
| log $\eta$ at TL [dPa·s] | N.A. | N.A. | N.A. | N.A. | N.A. | N.A. | N.A. | N.A. | N.A. | N.A. | N.A. | N.A. |

[Table 3]

| [mol%] | No.25 | No.26 | No.27 | No.28 | No.29 | No.30 | No.31 | No.32 | No.33 | No.34 | No.35 | No.36 |
|---|---|---|---|---|---|---|---|---|---|---|---|---|
| $SiO_2$ | 75.8 | 77.3 | 78.8 | 75.3 | 75.9 | 76.4 | 75.0 | 75.6 | 76.0 | 75.5 | 74.8 | 76.0 |
| $Al_2O_3$ | 7.0 | 5.5 | 4.0 | 6.5 | 9.1 | 8.6 | 9.1 | 8.5 | 8.5 | 8.5 | 8.6 | 8.7 |
| $B_2O_3$ | 0.1 | 0.1 | 0.1 | 0.1 | 0.1 | 0.1 | 0.1 | 0.1 | 0.1 | 0.1 | 0.1 | 0.1 |
| $Li_2O$ | 6.1 | 6.1 | 6.1 | 6.1 | 6.1 | 6.1 | 6.1 | 6.1 | 6.1 | 6.1 | 6.1 | 6.1 |
| $Na_2O$ | 5.9 | 5.9 | 5.9 | 5.8 | 5.8 | 5.8 | 5.8 | 5.8 | 5.8 | 5.8 | 5.8 | 5.8 |
| $K_2O$ | 1.9 | 1.9 | 1.9 | 1.9 | 2.5 | 2.5 | 3.4 | 3.4 | 2.5 | 2.5 | 2.5 | 2.7 |
| $MgO$ | 0.0 | 0.0 | 0.0 | 0.0 | 0.0 | 0.0 | 0.0 | 0.0 | 0.0 | 0.0 | 0.0 | 0.0 |
| $CaO$ | 2.6 | 2.6 | 2.6 | 3.7 | 0.0 | 0.0 | 0.0 | 0.0 | 0.0 | 0.0 | 0.0 | 0.0 |
| $SrO$ | 0.0 | 0.0 | 0.0 | 0.0 | 0.0 | 0.0 | 0.0 | 0.0 | 0.0 | 0.0 | 0.0 | 0.0 |
| $BaO$ | 0.0 | 0.0 | 0.0 | 0.0 | 0.0 | 0.0 | 0.0 | 0.0 | 0.0 | 0.0 | 0.0 | 0.0 |
| $ZrO_2$ | 0.5 | 0.5 | 0.5 | 0.5 | 0.5 | 0.5 | 0.5 | 0.5 | 1.0 | 1.5 | 2.0 | 0.5 |
| $SnO_2$ | 0.1 | 0.1 | 0.1 | 0.1 | 0.0 | 0.0 | 0.0 | 0.0 | 0.0 | 0.0 | 0.1 | 0.1 |
| $Fe_2O_3$ | N.A. | N.A. | N.A. | 0.005 | 0.004 | 0.004 | 0.004 | 0.004 | 0.004 | 0.004 | 0.004 | 0.005 |
| $TiO_2$ | N.A. | N.A. | N.A. | 0.011 | 0.011 | 0.011 | 0.010 | 0.011 | 0.012 | 0.014 | 0.015 | 0.011 |
| $Cl$ | N.A. | N.A. | N.A. | 0.012 | 0.020 | 0.020 | 0.018 | 0.020 | 0.020 | 0.020 | 0.020 | 0.020 |
| $SiO_2 + Al_2O_3 + R_2O + R'O$ | 99.3 | 99.3 | 99.3 | 99.3 | 99.4 | 99.4 | 99.4 | 99.4 | 98.9 | 98.4 | 97.8 | 99.3 |
| $R_2O$ | 13.9 | 13.9 | 13.9 | 13.8 | 14.4 | 14.4 | 15.3 | 15.3 | 14.4 | 14.4 | 14.4 | 14.6 |
| $R'O$ | 2.6 | 2.6 | 2.6 | 3.7 | 0.0 | 0.0 | 0.0 | 0.0 | 0.0 | 0.0 | 0.0 | 0.0 |
| $R_2O / Al_2O_3$ | 1.986 | 2.527 | 3.475 | 2.123 | 1.582 | 1.674 | 1.681 | 1.800 | 1.694 | 1.694 | 1.674 | 1.678 |
| $Li_2O / R_2O$ | 0.439 | 0.439 | 0.439 | 0.442 | 0.424 | 0.424 | 0.399 | 0.399 | 0.424 | 0.424 | 0.424 | 0.418 |
| $Li_2O / CaO$ | 2.346 | 2.346 | 2.346 | 1.649 | - | - | - | - | - | - | - | - |
| $CaO / R'O$ | 1.000 | 1.000 | 1.000 | 1.000 | - | - | - | - | - | - | - | - |
| $CaO / (R_2O + R'O)$ | 0.158 | 0.158 | 0.158 | 0.211 | 0.000 | 0.000 | 0.000 | 0.000 | 0.000 | 0.000 | 0.000 | 0.000 |
| $R'O / (R_2O + R'O)$ | 0.158 | 0.158 | 0.158 | 0.211 | 0.000 | 0.000 | 0.000 | 0.000 | 0.000 | 0.000 | 0.000 | 0.000 |
| $SiO_2 / Al_2O_3$ | 10.829 | 14.055 | 19.700 | 11.585 | 8.341 | 8.884 | 8.242 | 8.894 | 8.941 | 8.882 | 8.698 | 8.736 |

(continued)

| [mol%] | No.25 | No.26 | No.27 | No.28 | No.29 | No.30 | No.31 | No.32 | No.33 | No.34 | No.35 | No.36 |
|---|---|---|---|---|---|---|---|---|---|---|---|---|
| $(R_2O + R'O - Al_2O_3) / (SiO_2 + Al_2O_3)$ | 0.115 | 0.133 | 0.151 | 0.134 | 0.062 | 0.068 | 0.074 | 0.081 | 0.070 | 0.070 | 0.070 | 0.070 |
| Ps [°C] | N.A. | N.A. | N.A. | 485 | 496 | 490 | 485 | 481 | 500 | 511 | 522 | 488 |
| Ta [°C] | N.A. | N.A. | N.A. | 528 | 545 | 538 | 533 | 533 | 549 | 560 | 572 | 536 |
| Ts [°C] | N.A. | N.A. | N.A. | 753 | 806 | 795 | 784 | 777 | 808 | 822 | 836 | 792 |
| Working point ($10^{4.0}$ dPa s) [°C] | N.A. | N.A. | N.A. | 1159 | 1272 | 1259 | 1243 | 1230 | 1267 | 1269 | 1276 | 1253 |
| $10^{3.0}$ dPa·s [°C] | N.A. | N.A. | N.A. | 1381 | 1521 | 1508 | 1490 | 1474 | 1510 | 1506 | 1506 | 1502 |
| Hydrolytic resistance test [µg/g] | 57.8 | 69.8 | 102.9 | 63.9 | 36.9 | 35.3 | 37.8 | 39.1 | 37.8 | 40.0 | 41.9 | 37.5 |
| Acid resistance test (DIN12116) [mg/dm²] | N.A. | N.A. | N.A. | N.A. | N.A. | N.A. | N.A. | N.A. | N.A. | N.A. | N.A. | N.A. |
| Alkali resistance test (ISO695)[mg/dm²] | N.A. | N.A. | N.A. | 47 | N.A. | 55 | N.A. | N.A. | 42 | 37 | 35 | 49 |
| Linear thermal expansion coefficient (20 to 300°C) | N.A. | N.A. | N.A. | 72.2 | 70.6 | 70.9 | 75.6 | 75.4 | 70.4 | 70.2 | 70.0 | 72.0 |
| Liquidus temperature [°C] | N.A. | N.A. | N.A. | N.A. | N.A. | N.A. | N.A. | N.A. | N.A. | N.A. | N.A. | 804 |
| log η at TL [dPa·s] | N.A. | N.A. | N.A. | 5.5 | 6.8 | 6.9 | N.A. | N.A. | 7.4 | 7.1 | 7.3 | 7.5 |

[Table 4]

| [mol%] | No.37 | No.38 | No.39 | No.40 | No.41 | No.42 | No.43 | No.44 | No.45 | No.46 | No.47 | No.48 |
|---|---|---|---|---|---|---|---|---|---|---|---|---|
| $SiO_2$ | 73.9 | 73.9 | 73.9 | 75.9 | 75.9 | 77.9 | 77.8 | 77.9 | 76.9 | 76.8 | 76.9 | 76.8 |
| $Al_2O_3$ | 7.2 | 7.2 | 7.2 | 7.2 | 7.2 | 7.2 | 7.2 | 7.2 | 7.2 | 7.2 | 7.2 | 7.3 |
| $B_2O_3$ | 0.1 | 0.1 | 0.1 | 0.1 | 0.1 | 0.1 | 0.1 | 0.1 | 0.1 | 0.1 | 0.1 | 0.1 |
| $Li_2O$ | 8.1 | 6.1 | 4.1 | 6.1 | 4.1 | 6.1 | 4.1 | 2.1 | 3.1 | 4.1 | 4.6 | 5.1 |
| $Na_2O$ | 3.8 | 5.8 | 7.8 | 3.8 | 5.8 | 1.8 | 3.8 | 5.8 | 5.7 | 4.8 | 4.3 | 3.8 |
| $K_2O$ | 2.7 | 2.7 | 2.7 | 2.7 | 2.7 | 2.7 | 2.7 | 2.7 | 2.7 | 2.7 | 2.7 | 2.7 |
| $MgO$ | 0.0 | 0.0 | 0.0 | 0.0 | 0.0 | 0.0 | 0.0 | 0.0 | 0.0 | 0.0 | 0.0 | 0.0 |
| $CaO$ | 3.7 | 3.7 | 3.7 | 3.7 | 3.7 | 3.7 | 3.7 | 3.6 | 3.7 | 3.7 | 3.7 | 3.7 |
| $SrO$ | 0.0 | 0.0 | 0.0 | 0.0 | 0.0 | 0.0 | 0.0 | 0.0 | 0.0 | 0.0 | 0.0 | 0.0 |
| $BaO$ | 0.0 | 0.0 | 0.0 | 0.0 | 0.0 | 0.0 | 0.0 | 0.0 | 0.0 | 0.0 | 0.0 | 0.0 |
| $ZrO_2$ | 0.5 | 0.5 | 0.5 | 0.5 | 0.5 | 0.5 | 0.5 | 0.5 | 0.5 | 0.5 | 0.5 | 0.5 |
| $SnO_2$ | 0.0 | 0.0 | 0.0 | 0.0 | 0.0 | 0.0 | 0.1 | 0.1 | 0.1 | 0.1 | 0.0 | 0.0 |
| $Fe_2O_3$ | 0.005 | 0.005 | 0.005 | 0.005 | 0.006 | 0.006 | 0.006 | 0.006 | 0.006 | 0.006 | 0.006 | 0.006 |
| $TiO_2$ | 0.010 | 0.010 | 0.010 | 0.010 | 0.011 | 0.011 | 0.010 | 0.011 | 0.011 | 0.011 | 0.011 | 0.011 |
| $Cl$ | 0.014 | 0.019 | 0.025 | 0.014 | 0.018 | 0.007 | 0.013 | 0.018 | 0.018 | 0.016 | 0.016 | 0.014 |
| $SiO_2 + Al_2O_3 + R_2O + R'O$ | 99.4 | 99.4 | 99.4 | 99.4 | 99.4 | 99.4 | 99.3 | 99.3 | 99.3 | 99.3 | 99.4 | 99.4 |
| $R_2O$ | 14.6 | 14.6 | 14.6 | 12.6 | 12.6 | 10.6 | 10.6 | 10.6 | 11.5 | 11.6 | 11.6 | 11.6 |
| $R'O$ | 3.7 | 3.7 | 3.7 | 3.7 | 3.7 | 3.7 | 3.7 | 3.6 | 3.7 | 3.7 | 3.7 | 3.7 |
| $R_2O / Al_2O_3$ | 2.028 | 2.028 | 2.028 | 1.750 | 1.750 | 1.472 | 1.472 | 1.472 | 1.597 | 1.611 | 1.611 | 1.589 |
| $Li_2O / R_2O$ | 0.555 | 0.418 | 0.281 | 0.484 | 0.325 | 0.575 | 0.387 | 0.198 | 0.270 | 0.353 | 0.397 | 0.440 |
| $Li_2O / CaO$ | 2.189 | 1.649 | 1.108 | 1.649 | 1.108 | 1.649 | 1.108 | 0.583 | 0.838 | 1.108 | 1.243 | 1.378 |
| $CaO / R'O$ | 1.000 | 1.000 | 1.000 | 1.000 | 1.000 | 1.000 | 1.000 | 1.000 | 1.000 | 1.000 | 1.000 | 1.000 |
| $CaO / (R_2O + R'O)$ | 0.202 | 0.202 | 0.202 | 0.227 | 0.227 | 0.259 | 0.259 | 0.254 | 0.243 | 0.242 | 0.242 | 0.242 |
| $R'O / (R_2O + R'O)$ | 0.202 | 0.202 | 0.202 | 0.227 | 0.227 | 0.259 | 0.259 | 0.254 | 0.243 | 0.242 | 0.242 | 0.242 |
| $SiO_2 / Al_2O_3$ | 10.264 | 10.264 | 10.264 | 10.542 | 10.542 | 10.819 | 10.806 | 10.819 | 10.681 | 10.667 | 10.681 | 10.521 |

EP 4 144 706 A1

18

(continued)

| [mol%] | No.37 | No.38 | No.39 | No.40 | No.41 | No.42 | No.43 | No.44 | No.45 | No.46 | No.47 | No.48 |
|---|---|---|---|---|---|---|---|---|---|---|---|---|
| ($R_2O$ + R'O - $Al_2O_3$) / ($SiO_2$ + $Al_2O_3$) | 0.137 | 0.137 | 0.137 | 0.110 | 0.110 | 0.083 | 0.084 | 0.082 | 0.095 | 0.096 | 0.096 | 0.095 |
| Ps [°C] | 480 | 483 | 489 | 501 | 508 | 528 | 533 | 546 | 524 | 518 | 517 | 515 |
| Ta [°C] | 523 | 526 | 533 | 547 | 553 | 576 | 583 | 597 | 572 | 566 | 564 | 562 |
| Ts [°C] | 744 | 748 | 757 | 786 | 796 | 833 | 845 | 863 | 828 | 820 | 817 | 814 |
| Working point ($10^{4.0}$ dPa s) [°C] | 1141 | 1153 | 1166 | 1211 | 1225 | 1283 | 1300 | 1321 | 1273 | 1264 | 1260 | 1258 |
| $10^{3.0}$ dPa·s [°C] | 1361 | 1374 | 1390 | 1442 | 1458 | 1522 | 1541 | 1563 | 1511 | 1504 | 1498 | 1494 |
| Hydrolytic resistance test [μg/g] | 62.0 | 63.9 | 68.8 | 43.4 | 47.7 | 32.6 | 31.3 | 35.3 | 41.2 | 41.2 | 41.2 | 41.5 |
| Acid resistance test (DIN12116) [mg/dm²] | N.A. | N.A. | N.A. | N.A. | N.A. | N.A. | N.A. | N.A. | N.A. | N.A. | N.A. | N.A. |
| Alkali resistance test (ISO695) [mg/dm²] | N.A. | N.A. | N.A. | N.A. | N.A. | N.A. | N.A. | N.A. | N.A. | N.A. | N.A. | N.A. |
| Linear thermal expansion coefficient (20 to 300°C) | 72.4 | 76.1 | 79.3 | 67.7 | 71.6 | 58.0 | 62.6 | 66.6 | 68.9 | 67.0 | 66.1 | 65.0 |
| Liquidus temperature [°C] | 919 | 914 | 925 | 964 | 982 | 982 | 1025 | 1046 | 1020 | 999 | 1017 | 995 |
| log η at TL [dPa·s] | 5.6 | 5.7 | 5.7 | 5.7 | 5.6 | 6.0 | 5.8 | 5.7 | 5.6 | 5.7 | 5.5 | 5.7 |

[Table 5]

| [mol%] | No.49 | No.50 | No.51 | No.52 | No.53 | No.54 | No.55 | No.56 | No.57 | No.58 | No.59 | No.60 |
|---|---|---|---|---|---|---|---|---|---|---|---|---|
| $SiO_2$ | 76.8 | 76.7 | 75.9 | 75.7 | 77.0 | 78.5 | 80.0 | 77.6 | 78.3 | 79.1 | 79.8 | 78.6 |
| $Al_2O_3$ | 7.2 | 7.3 | 7.2 | 7.3 | 6.0 | 5.5 | 5.0 | 7.0 | 6.8 | 6.5 | 6.3 | 6.0 |
| $B_2O_3$ | 0.1 | 0.1 | 0.1 | 0.1 | 0.1 | 0.1 | 0.1 | 0.1 | 0.1 | 0.1 | 0.1 | 0.1 |
| $Li_2O$ | 6.1 | 7.1 | 5.1 | 7.1 | 8.1 | 7.1 | 6.1 | 6.1 | 6.1 | 6.1 | 6.1 | 6.1 |
| $Na_2O$ | 2.9 | 1.9 | 4.8 | 2.9 | 1.9 | 1.9 | 1.9 | 5.9 | 5.4 | 4.9 | 4.4 | 5.9 |
| $K_2O$ | 2.7 | 2.7 | 2.7 | 2.7 | 2.7 | 2.7 | 2.7 | 2.7 | 2.7 | 2.7 | 2.7 | 2.7 |
| $MgO$ | 0.0 | 0.0 | 0.0 | 0.0 | 0.0 | 0.0 | 0.0 | 0.0 | 0.0 | 0.0 | 0.0 | 0.0 |
| $CaO$ | 3.7 | 3.7 | 3.7 | 3.7 | 3.6 | 3.6 | 3.6 | 0.0 | 0.0 | 0.0 | 0.0 | 0.0 |
| $SrO$ | 0.0 | 0.0 | 0.0 | 0.0 | 0.0 | 0.0 | 0.0 | 0.0 | 0.0 | 0.0 | 0.0 | 0.0 |
| $BaO$ | 0.0 | 0.0 | 0.0 | 0.0 | 0.0 | 0.0 | 0.0 | 0.0 | 0.0 | 0.0 | 0.0 | 0.0 |
| $ZrO_2$ | 0.5 | 0.5 | 0.5 | 0.5 | 0.5 | 0.5 | 0.5 | 0.5 | 0.5 | 0.5 | 0.5 | 0.5 |
| $SnO_2$ | 0.0 | 0.0 | 0.0 | 0.0 | 0.1 | 0.1 | 0.1 | 0.1 | 0.1 | 0.1 | 0.1 | 0.1 |
| $Fe_2O_3$ | 0.005 | 0.005 | 0.005 | 0.005 | N.A. | N.A. | N.A. | 0.004 | 0.004 | 0.004 | 0.005 | 0.005 |
| $TiO_2$ | 0.010 | 0.010 | 0.010 | 0.010 | N.A. | N.A. | N.A. | 0.011 | 0.011 | 0.011 | 0.011 | 0.011 |
| $Cl$ | 0.011 | 0.009 | 0.016 | 0.011 | N.A. | N.A. | N.A. | 0.018 | 0.018 | 0.016 | 0.016 | 0.019 |
| $SiO_2 + Al_2O_3 + R_2O + R'O$ | 99.4 | 99.4 | 99.4 | 99.4 | 99.3 | 99.3 | 99.3 | 99.3 | 99.3 | 99.3 | 99.3 | 99.3 |
| $R_2O$ | 11.7 | 11.7 | 12.6 | 12.7 | 12.7 | 11.7 | 10.7 | 14.7 | 14.2 | 13.7 | 13.2 | 14.7 |
| $R'O$ | 3.7 | 3.7 | 3.7 | 3.7 | 3.6 | 3.6 | 3.6 | 0.0 | 0.0 | 0.0 | 0.0 | 0.0 |
| $R_2O / Al_2O_3$ | 1.625 | 1.603 | 1.750 | 1.740 | 2.117 | 2.127 | 2.140 | 2.100 | 2.088 | 2.108 | 2.095 | 2.450 |
| $Li_2O / R_2O$ | 0.521 | 0.607 | 0.405 | 0.559 | 0.638 | 0.607 | 0.570 | 0.415 | 0.430 | 0.445 | 0.462 | 0.415 |
| $Li_2O / CaO$ | 1.649 | 1.919 | 1.378 | 1.919 | 2.250 | 1.972 | 1.694 | - | - | - | - | - |
| $CaO / R'O$ | 1.000 | 1.000 | 1.000 | 1.000 | 1.000 | 1.000 | 1.000 | - | - | - | - | - |
| $CaO / (R_2O + R'O)$ | 0.240 | 0.240 | 0.227 | 0.226 | 0.221 | 0.235 | 0.252 | 0.000 | 0.000 | 0.000 | 0.000 | 0.000 |
| $R'O / (R_2O + R'O)$ | 0.240 | 0.240 | 0.227 | 0.226 | 0.221 | 0.235 | 0.252 | 0.000 | 0.000 | 0.000 | 0.000 | 0.000 |
| $SiO_2 / Al_2O_3$ | 10.667 | 10.507 | 10.542 | 10.370 | 12.833 | 14.273 | 16.000 | 11.086 | 11.515 | 12.169 | 12.667 | 13.100 |

(continued)

| [mol%] | No.49 | No.50 | No.51 | No.52 | No.53 | No.54 | No.55 | No.56 | No.57 | No.58 | No.59 | No.60 |
|---|---|---|---|---|---|---|---|---|---|---|---|---|
| $(R_2O + R'O - Al_2O_3) / (SiO_2 + Al_2O_3)$ | 0.098 | 0.096 | 0.110 | 0.110 | 0.124 | 0.117 | 0.109 | 0.091 | 0.087 | 0.084 | 0.080 | 0.103 |
| Ps [°C] | 513 | 512 | 503 | 500 | N.A. | N.A. | N.A. | 477 | 478 | 481 | 485 | 469 |
| Ta [°C] | 560 | 559 | 549 | 545 | N.A. | N.A. | N.A. | 525 | 527 | 530 | 534 | 517 |
| Ts [°C] | 810 | 807 | 790 | 784 | N.A. | N.A. | N.A. | 775 | 780 | 787 | 797 | 763 |
| Working point ($10^{4.0}$ dPa s) [°C] | 1248 | 1241 | 1223 | 1207 | N.A. | N.A. | 1258 | 1223 | 1230 | 1246 | 1257 | 1206 |
| $10^{3.0}$ dPa s [°C] | 1484 | 1476 | 1455 | 1437 | N.A. | N.A. | 1495 | 1466 | 1475 | 1494 | 1507 | 1446 |
| Hydrolytic resistance test [μg/g] | 40.6 | 40.7 | 47.1 | 45.0 | 47.1 | 43.4 | 38.4 | 37.8 | 36.3 | 34.4 | 32.9 | 42.8 |
| Acid resistance test (DIN12116) [mg/dm²] | N.A. | N.A. | N.A. | N.A. | N.A. | N.A. | N.A. | N.A. | N.A. | 0.46 | N.A. | N.A. |
| Alkali resistance test (ISO695) [mg/dm²] | N.A. | N.A. | N.A. | N.A. | N.A. | N.A. | N.A. | N.A. | N.A. | 52 | N.A. | N.A. |
| Linear thermal expansion coefficient (20 to 300°C) | 62.9 | 60.6 | 69.4 | 65.2 | N.A. | N.A. | N.A. | 70.5 | 69.2 | 66.7 | 64.5 | 70.6 |
| Liquidus temperature [°C] | 990 | 960 | 995 | 955 | N.A. | N.A. | N.A. | N.A. | N.A. | 800 | 846 | N.A. |
| log η at TL [dPa·s] | 5.7 | 5.9 | 5.5 | 5.7 | N.A. | N.A. | N.A. | N.A. | N.A. | 7.4 | 7.0 | N.A. |

[Table 6]

| [mol%] | No.61 | No.62 | No.63 | No.64 | No.65 | No.66 | No.67 | No.68 | No.69 |
|---|---|---|---|---|---|---|---|---|---|
| $SiO_2$ | 79.2 | 80.1 | 81.0 | 81.5 | 82.3 | 79.1 | 79.9 | 81.9 | 84.0 |
| $Al_2O_3$ | 5.8 | 5.5 | 5.3 | 5.0 | 4.8 | 5.3 | 5.0 | 4.0 | 3.5 |
| $B_2O_3$ | 0.1 | 0.1 | 0.1 | 0.1 | 0.1 | 0.1 | 0.1 | 0.1 | 0.1 |
| $Li_2O$ | 6.1 | 6.1 | 6.1 | 6.1 | 6.1 | 4.8 | 4.8 | 6.1 | 6.1 |
| $Na_2O$ | 5.5 | 4.9 | 4.3 | 4.1 | 3.5 | 2.7 | 2.7 | 4.7 | 3.1 |
| $K_2O$ | 2.7 | 2.7 | 2.7 | 2.7 | 2.7 | 3.9 | 3.6 | 2.7 | 2.7 |
| $MgO$ | 0.0 | 0.0 | 0.0 | 0.0 | 0.0 | 0.0 | 0.0 | 0.0 | 0.0 |
| $CaO$ | 0.0 | 0.0 | 0.0 | 0.0 | 0.0 | 3.6 | 3.4 | 0.0 | 0.0 |
| $SrO$ | 0.0 | 0.0 | 0.0 | 0.0 | 0.0 | 0.0 | 0.0 | 0.0 | 0.0 |
| $BaO$ | 0.0 | 0.0 | 0.0 | 0.0 | 0.0 | 0.0 | 0.0 | 0.0 | 0.0 |
| $ZrO_2$ | 0.5 | 0.5 | 0.5 | 0.5 | 0.5 | 0.5 | 0.5 | 0.5 | 0.5 |
| $SnO_2$ | 0.1 | 0.1 | 0.0 | 0.0 | 0.0 | 0.0 | 0.0 | 0.0 | 0.0 |
| $Fe_2O_3$ | 0.005 | 0.004 | 0.005 | 0.005 | 0.005 | 0.005 | 0.005 | 0.004 | 0.004 |
| $TiO_2$ | 0.011 | 0.011 | 0.011 | 0.012 | 0.012 | 0.011 | 0.011 | 0.012 | 0.011 |
| $Cl$ | 0.018 | 0.016 | 0.014 | 0.007 | 0.005 | 0.005 | 0.005 | 0.007 | 0.005 |
| $SiO_2 + Al_2O_3 + R_2O + R'O$ | 99.3 | 99.3 | 99.4 | 99.4 | 99.4 | 99.4 | 99.4 | 99.4 | 99.4 |
| $R_2O$ | 14.3 | 13.7 | 13.1 | 12.9 | 12.3 | 11.4 | 11.1 | 13.5 | 11.9 |
| $R'O$ | 0.0 | 0.0 | 0.0 | 0.0 | 0.0 | 3.6 | 3.4 | 0.0 | 0.0 |
| $R_2O / Al_2O_3$ | 2.466 | 2.491 | 2.472 | 2.580 | 2.563 | 2.151 | 2.220 | 3.375 | 3.400 |
| $Li_2O / R_2O$ | 0.427 | 0.445 | 0.466 | 0.473 | 0.496 | 0.421 | 0.432 | 0.452 | 0.513 |
| $Li_2O / CaO$ | - | - | - | - | - | 1.333 | 1.412 | - | - |
| $CaO / R'O$ | - | - | - | - | - | 1.000 | 1.000 | - | - |
| $CaO / (R_2O + R'O)$ | 0.000 | 0.000 | 0.000 | 0.000 | 0.000 | 0.240 | 0.234 | 0.000 | 0.000 |
| $R'O / (R_2O + R'O)$ | 0.000 | 0.000 | 0.000 | 0.000 | 0.000 | 0.240 | 0.234 | 0.000 | 0.000 |
| $SiO_2 / Al_2O_3$ | 13.655 | 14.564 | 15.283 | 16.300 | 17.146 | 14.925 | 15.980 | 20.475 | 24.000 |
| $(R_2O + R'O - Al_2O_3) / (SiO_2 + Al_2O_3)$ | 0.100 | 0.096 | 0.090 | 0.091 | 0.086 | 0.115 | 0.112 | 0.111 | 0.096 |
| Ps [°C] | 470 | 472 | 478 | 477 | 482 | 510 | 509 | 464 | 478 |
| Ta [°C] | 518 | 521 | 527 | 527 | 533 | 557 | 557 | 513 | 529 |
| Ts [°C] | 767 | 773 | 788 | 788 | 801 | 812 | 814 | 765 | 796 |
| Working point ($10^{4.0}$ dPa s) [°C] | 1210 | 1228 | 1240 | 1239 | 1257 | 1252 | 1261 | 1202 | 1247 |
| $10^{3.0}$ dPa·s [°C] | 1452 | 1469 | 1488 | 1488 | 1507 | 1485 | 1498 | 1440 | 1493 |
| Hydrolytic resistance test [μg/g] | 42.8 | 39.1 | 34.4 | 36.0 | 32.2 | 49.0 | 46.2 | 58.9 | 40.6 |

(continued)

| [mol%] | No.61 | No.62 | No.63 | No.64 | No.65 | No.66 | No.67 | No.68 | No.69 |
|---|---|---|---|---|---|---|---|---|---|
| Acid resistance test (DIN12116) [mg/dm$^2$] | N.A. | 0.59 | N.A. | N.A. | N.A. | 0.26 | 0.36 | 0.27 | N.A. |
| Alkali resistance test (ISO695) [mg/dm$^2$] | N.A. | 54 | N.A. | N.A. | N.A. | 48 | 47 | 52 | N.A. |
| Linear thermal expansion coefficient (20 to 300°C) | 69.6 | 64.0 | 66.7 | 63.0 | 60.2 | 64.3 | 62.6 | 65.9 | 58.3 |
| Liquidus temperature [°C] | 843 | 887 | 977 | 1002 | N.A. | 986 | 977 | N.A. | N.A. |
| log η at TL [dPa·s] | 6.7 | 6.3 | 5.7 | 5.5 | N.A. | 5.8 | 5.9 | N.A. | N.A. |

Each sample was prepared as follows. First, 550 g of a batch was mixed so as to have a glass composition shown in the tables, and the mixture was melted at 1550°C for 2.5 hours using a platinum crucible. In order to enhance the homogeneity of the sample, stirring was performed twice in the melting process. Further, in order to enhance the homogeneity of the molten glass, the molten glass was water-crushed and dried, and then melted again at 1550°C for 1 hour using a platinum crucible. After stirring once, the molten glass was melted at 1600°C for 2 hours in order to reduce bubbles in the glass. Thereafter, the molten glass was poured out to produce an ingot, and the ingot was processed into a shape necessary for measurement and subjected to various evaluations. The results are shown in the tables.

The strain point Ps was determined by a fiber stretching method in accordance with ASTM C336. The annealing point Ta and the softening point Ts were obtained by a fiber stretching method in accordance with ASTM C388.

The working point (temperature at which the viscosity of the glass becomes $10^{4.0}$ dPa·s) and the temperature at which the viscosity of the glass becomes $10^{3.0}$ dPa s were obtained by a platinum sphere pull up method.

For a hydrolytic resistance test, a hydrolytic resistance test (acetone washing) according to ISO 720 was performed. The detailed test procedure is as described above.

The acid resistance was evaluated by an acid resistance test according to YBB00342004, and the alkali resistance was evaluated by a test according to ISO 695.

The linear thermal expansion coefficient was measured in a temperature range of 20°C to 300°C by a dilatometer using a glass formed into a rod shape of about 5 mm$_\varphi$ × 20 mm as a measurement sample.

The liquidus temperature was obtained by filling a ground glass into a platinum boat of about 120 × 20 × 10 mm, placing the platinum boat in an electric furnace having a linear temperature gradient for 24 hours, then specifying a crystal precipitation site by microscopic observation, and specifying a temperature corresponding to the crystal precipitation site from a temperature gradient graph of the electric furnace.

The liquidus viscosity log η at TL was obtained by obtaining a viscosity curve of the glass based on the strain point, the annealing point, the softening point, the working temperature, and the viscosity calculation formula of the Fulcher, and calculating the viscosity of the glass at the liquidus temperature from the viscosity curve.

As is clear from the tables, in Sample Nos. 1 to 69, the content of $B_2O_3$ in the glass composition was small, the working temperature was 1321°C or less, and the elution amount of alkali by the hydrolytic resistance test was 102.9 μg/g or less.

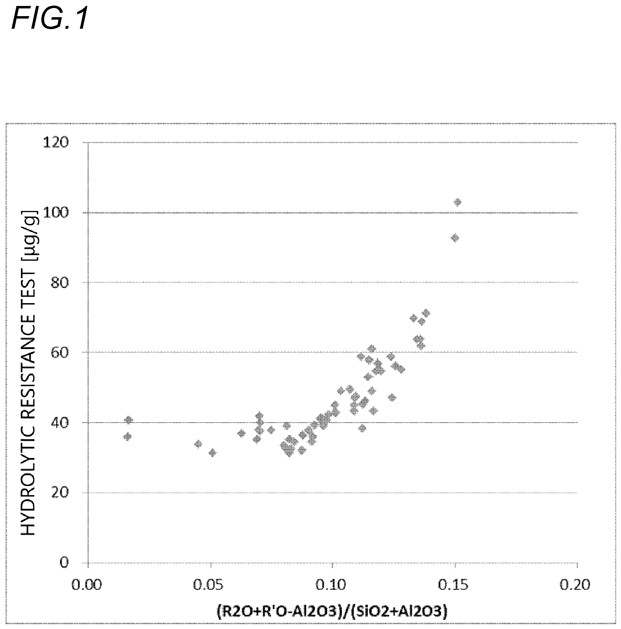

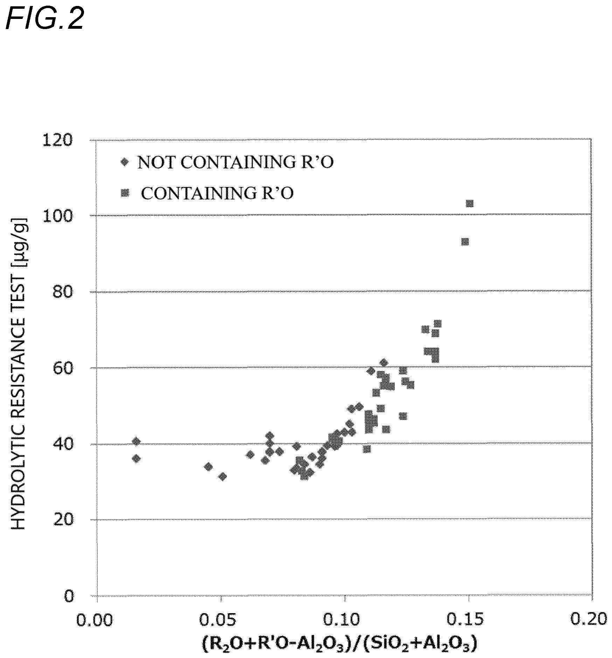

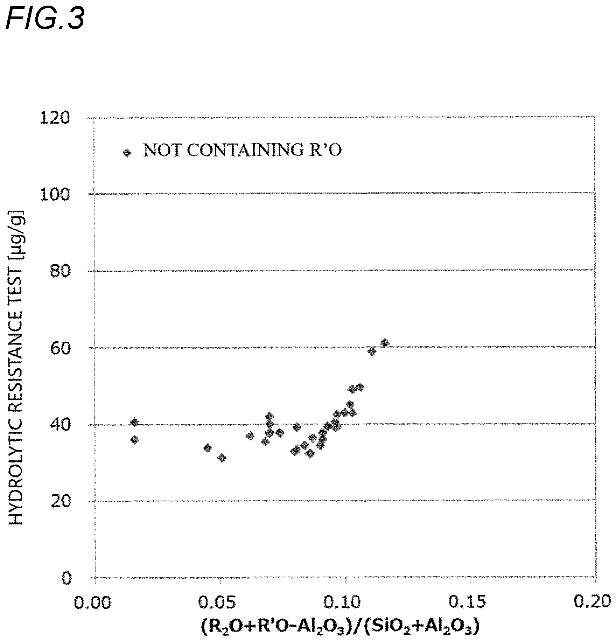

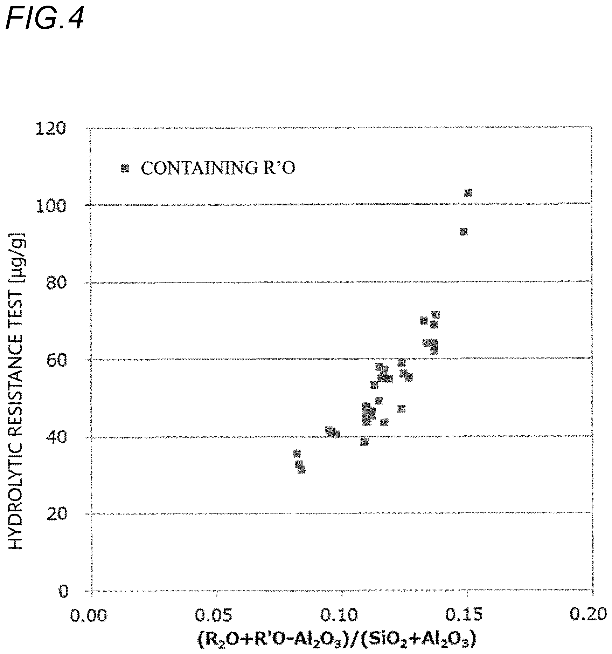

FIG. 1 is a graph obtained by plotting molar ratios ($Li_2O + Na_2O + K_2O + MgO + CaO + SrO + BaO - Al_2O_3$) / ($SiO_2 + Al_2O_3$) of the glass samples on a horizontal axis, and hydrolytic resistance test data on a vertical axis. As can be seen from FIG. 1, there is a correlation between the molar ratio ($Li_2O + Na_2O + K_2O + MgO + CaO + SrO + BaO - Al_2O_3$) / ($SiO_2 + Al_2O_3$) and the hydrolytic resistance. It can be seen that the smaller the molar ratio ($Li_2O + Na_2O + K_2O + MgO + CaO + SrO + BaO - Al_2O_3$) / ($SiO_2 + Al_2O_3$) is, the better the hydrolytic resistance is. FIG. 2 is a graph showing the presence or absence of MgO + CaO + SrO + BaO in different plots in FIG. 1. FIG. 3 is a graph showing data of glass not containing MgO + CaO + SrO + BaO extracted from data shown in FIG. 1. FIG. 4 is a graph showing data of glass containing MgO + CaO + SrO + BaO extracted from the data shown in FIG. 1.

INDUSTRIAL APPLICABILITY

The glass for a pharmaceutical container of the present invention is suitable as a glass for a pharmaceutical container for manufacturing a pharmaceutical container such as an ampoule, a vial, a prefilled syringe, and a cartridge, and is also applicable to a pharmaceutical container for an oral agent and bottles for beverages.

**Claims**

1. A glass for a pharmaceutical container, comprising, as a glass composition, in terms of mol%, 70% to 85% of SiOz, 3% to 13% of $Al_2O_3$, 0% to 5% of $B_2O_3$, 0.1% to 18% of $Li_2O + Na_2O + KzO$, and 0% to 10% of MgO + CaO + SrO + BaO, wherein a molar ratio $(LizO + Na_2O + K_2O) / Al_2O_3$ is 1 or more and a molar ratio $(LizO + Na_2O + K_2O + MgO + CaO + SrO + BaO - Al_2O_3) / (SiOz + Al_2O_3)$ is 0.2 or less.

2. The glass for a pharmaceutical container according to claim 1, wherein a content of $Li_2O$ is 0 mol% to 8.1 mol%, a content of $Na_2O$ is 0.1 mol% to 8 mol%, and a content of $K_2O$ is 0.01 mol% to 5 mol%.

3. The glass for a pharmaceutical container according to claim 1 or 2, wherein a content of MgO + CaO + SrO + BaO is 0 mol% to 5 mol%.

4. The glass for a pharmaceutical container according to any one of claims 1 to 3, wherein a content of MgO is 0 mol% to 1.5 mol%, a content of CaO is 0 mol% to 4 mol%, a content of SrO is 0 mol% to 0.3 mol%, and a content of BaO is 0 mol% to 0.3 mol%.

5. The glass for a pharmaceutical container according to any one of claims 1 to 4, wherein the molar ratio $Li_2O / (Li_2O + Na_2O + K_2O)$ is 0.6 or less.

6. The glass for a pharmaceutical container according to any one of claims 1 to 5, wherein a molar ratio $(LizO + Na_2O + K_2O) / Al_2O_3$ is 2 or more.

7. The glass for a pharmaceutical container according to any one of claims 1 to 6, wherein a molar ratio $CaO / (LizO + Na_2O + K_2O + MgO + CaO + SrO + BaO)$ is less than 0.018.

8. The glass for a pharmaceutical container according to any one of claims 1 to 7, wherein CaO is contained, and a molar ratio LizO / CaO is 3.1 or less.

9. The glass for a pharmaceutical container according to any one of claims 1 to 8, wherein a content of $SiOz + Al_2O_3 + Li_2O + Na_2O + K_2O + MgO + CaO + SrO + BaO$ is 90 mol% or more.

10. The glass for a pharmaceutical container according to any one of claims 1 to 9, wherein a content of $B_2O_3$ is 0.01 mol% to 1 mol%.

11. The glass for a pharmaceutical container according to any one of claims 1 to 10, wherein a content of $ZrO_2$ is 0 mol% to 2 mol%.

12. A glass for a pharmaceutical container, comprising, as a glass composition, in terms of mol%, 70% to 85% of SiOz, 3% to 10% of $Al_2O_3$, 0% to 5% of $B_2O_3$, 0.1% to less than 13.9% of $LizO + Na_2O + KzO$, and 0% to 10% of MgO + CaO + SrO + BaO, wherein a molar ratio $Li_2O / (LizO + Na_2O + K_2O)$ is 0.5 or less, a molar ratio $(Li_2O + Na_2O + K_2O) / Al_2O_3$ is 2.0 or more, a molar ratio $(LizO + Na_2O + K_2O + MgO + CaO + SrO + BaO - Al_2O_3) / (SiOz + Al_2O_3)$ is 0.156 or less, and a molar ratio $CaO / (LizO + Na_2O + K_2O + MgO + CaO + SrO + BaO)$ is less than 0.018.

13. A glass for a pharmaceutical container, comprising, as a glass composition, in terms of mol%, 70% to 85% of SiOz, 3% to 10% of $Al_2O_3$, 0% to 5% of $B_2O_3$, 0.1% to less than 13.9% of $Li_2O + Na_2O + K_2O$, and CaO, wherein a molar ratio $Li_2O / (Li_2O + Na_2O + K_2O)$ is 0.5 or less, a molar ratio $(Li_2O + Na_2O + K_2O) / Al_2O_3$ is 2.0 or more, a molar ratio $(Li_2O + Na_2O + K_2O + MgO + CaO + SrO + BaO - Al_2O_3) / (SiOz + Al_2O_3)$ is 0.156 or less, and a molar ratio LizO / CaO is 3.1 or less.

14. The glass for a pharmaceutical container according to any one of claims 1 to 13, wherein a molar ratio (MgO + CaO

+ SrO + BaO) / (LizO + Na$_2$O + K$_2$O + MgO + CaO + SrO + BaO) is 0.06 or less.

15. A glass for a pharmaceutical container, comprising, as a glass composition, in terms of mol%, 75% to 85% of SiOz, 3% to 13% of Al$_2$O$_3$, 0% to 4% of B$_2$O$_3$, 0.11% to 16% of Li$_2$O + Na$_2$O + K$_2$O, 0.1% to 15% of Na$_2$O, and 0.01% to 5% of K$_2$O, wherein a molar ratio (LizO + Na$_2$O + K$_2$O) / Al$_2$O$_3$ is 2 or more, a molar ratio (MgO + CaO + SrO + BaO) / (LizO + Na$_2$O + K$_2$O + MgO + CaO + SrO + BaO) is 0.06 or less, and a molar ratio (LizO + Na$_2$O + K$_2$O + MgO + CaO + SrO + BaO - Al$_2$O$_3$) / (SiOz + Al$_2$O$_3$) is 0.2 or less.

16. The glass for a pharmaceutical container according to any one of claims 1 to 15, wherein a molar ratio CaO / (MgO + CaO + SrO + BaO) is 0.5 or more.

17. A glass for a pharmaceutical container, comprising, as a glass composition, in terms of mol%, 70% to 85% of SiOz, 3% to 13% of Al$_2$O$_3$, 0% to 5% of B$_2$O$_3$, 0.1% to 16% of Li$_2$O + Na$_2$O + KzO, 0.1% to 15% of Na$_2$O, and 0.1% to 5% of MgO + CaO + SrO + BaO, wherein a molar ratio (LizO + Na$_2$O + K$_2$O) / Al$_2$O$_3$ is 2 or more, a molar ratio CaO / (MgO + CaO + SrO + BaO) is 0.5 or more, and a molar ratio (LizO + Na$_2$O + K$_2$O + MgO + CaO + SrO + BaO - Al$_2$O$_3$) / (SiOz + Al$_2$O$_3$) is 0.2 or less.

18. The glass for a pharmaceutical container according to any one of claims 1 to 17, wherein a molar ratio SiOz / Al$_2$O$_3$ is 10 or more.

19. A glass for a pharmaceutical container, comprising, as a glass composition, in terms of mol%, 70% to 85% of SiOz, 3% to 13% of Al$_2$O$_3$, 0% to 5% of B$_2$O$_3$, 0.21% to 16% of Li$_2$O + Na$_2$O + K$_2$O, 0.1% to 10% of Li$_2$O, 0.1% to 15% of Na$_2$O, 0.01% to 5% of K$_2$O, and 0% to 6% of MgO + CaO + SrO + BaO, wherein a molar ratio (LizO + Na$_2$O + K$_2$O) / Al$_2$O$_3$ is 1 or more, a molar ratio SiOz / Al$_2$O$_3$ is more than 13.2, and a molar ratio (LizO + Na$_2$O + K$_2$O + MgO + CaO + SrO + BaO - Al$_2$O$_3$) / (SiOz + Al$_2$O$_3$) is less than 0.155.

20. The glass for a pharmaceutical container according to any one of claims 1 to 19, wherein a class in a hydrolytic resistance test (acetone washing) according to ISO 720 is at least HGA1.

21. The glass for a pharmaceutical container according to any one of claims 1 to 20, wherein a working point is 1300°C or less.

22. A glass tube for a pharmaceutical container, comprising the glass for a pharmaceutical container according to any one of claims 1 to 21.

23. A pharmaceutical container comprising the glass for a pharmaceutical container according to any one of claims 1 to 21.

FIG.1

FIG.2

## FIG.3

FIG.4

**EP 4 144 706 A1**

<table>
<tr><td colspan="2" align="center">**INTERNATIONAL SEARCH REPORT**</td><td>International application No.<br>PCT/JP2021/015340</td></tr>
</table>

**A. CLASSIFICATION OF SUBJECT MATTER**
Int.Cl. C03C3/083(2006.01)i, C03C3/085(2006.01)i, C03C3/087(2006.01)i, C03C3/091(2006.01)i, C03C3/093(2006.01)i, A61J1/05(2006.01)i
FI: C03C3/091, C03C3/093, C03C3/083, C03C3/085, C03C3/087, A61J1/05311
According to International Patent Classification (IPC) or to both national classification and IPC

**B. FIELDS SEARCHED**
Minimum documentation searched (classification system followed by classification symbols)
Int.Cl. C03C1/00-14/00

Documentation searched other than minimum documentation to the extent that such documents are included in the fields searched
Published examined utility model applications of Japan    1922-1996
Published unexamined utility model applications of Japan  1971-2021
Registered utility model specifications of Japan          1996-2021
Published registered utility model applications of Japan  1994-2021

Electronic data base consulted during the international search (name of data base and, where practicable, search terms used)
INTERGLAD

**C. DOCUMENTS CONSIDERED TO BE RELEVANT**

| Category* | Citation of document, with indication, where appropriate, of the relevant passages | Relevant to claim No. |
|---|---|---|
| X | JP 2017-36202 A (SCHOTT AG) 16 February 2017 (2017-02-16), paragraphs [0018], [0031], examples A1-A4, A7 | 1-9, 11-23 |
| X | JP 2015-13793 A (NIPPON ELECTRIC GLASS CO., LTD.) 22 January 2015 (2015-01-22), paragraphs [0009], [0043]-[0045], examples no. 1, 3-20, 22-25, 27-34, 36-40 | 1-13, 18, 20-23 |
| X | JP 2014-37343 A (NIPPON ELECTRIC GLASS CO., LTD.) 27 February 2014 (2014-02-27), paragraph [0012], examples no. 20-23, 30, 31, 33 | 1, 3, 5, 7-11, 18, 20-23 |
| A | JP 1-249633 A (TOSHIBA GLASS CO., LTD.) 04 October 1989 (1989-10-04), conventional example no. 5 | 1-23 |

☐ Further documents are listed in the continuation of Box C.   ☒ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>10 June 2021 | Date of mailing of the international search report<br>22 June 2021 |
|---|---|
| Name and mailing address of the ISA/<br>Japan Patent Office<br>3-4-3, Kasumigaseki, Chiyoda-ku,<br>Tokyo 100-8915, Japan | Authorized officer<br><br>Telephone No. |

Form PCT/ISA/210 (second sheet) (January 2015)

30

| | | |
|---|---|---|
| JP 2017-36202 A | 16 February 2017 | US 2017/0029319 A1<br>paragraphs [0020], [0033],<br>examples A1-A4, A7<br>EP 3124447 A1 |
| JP 2015-13793 A | 22 January 2015 | US 2016/0107924 A1<br>paragraphs [0009], [0055]-[0057],<br>example no. 1, 3-20, 22-25, 27-34,<br>36-40<br>WO 2014/196655 A1 |
| JP 2014-37343 A | 27 February 2014 | US 2015/0246846 A1<br>paragraph [0015],<br>example no. 20-23, 30, 31, 33<br>WO 2014/014003 A1<br>EP 2876092 A1 |
| JP 1-249633 A | 04 October 1989 | (Family: none) |

Form PCT/ISA/210 (patent family annex) (January 2015)

**REFERENCES CITED IN THE DESCRIPTION**

**Patent documents cited in the description**

- WO 2013063275 A1